# EUROPEAN PATENT SPECIFICATION

(11) **EP 3 779 762 B1**
(45) Date of publication and mention of the grant of the patent: **10.07.2024**
(21) Application number: 20182271.5
(22) Date of filing: 25.06.2020
(51) Int. Cl.: H04L 1/00, G06F 21/85, H04L 9/32, H04L 9/06

(54) **SECURE COMMUNICATIONS OVER COMPUTER BUSES**
SICHERE KOMMUNIKATION ÜBER COMPUTERBUSSE
COMMUNICATIONS SÉCURISÉES SUR DES BUS INFORMATIQUES

(30) Priority: 13.08.2019 US 201962885935 P; 23.06.2020 US 202016946470
(43) Date of publication of application: 17.02.2021
(73) Proprietor: INTEL Corporation, Santa Clara, CA 95054 (US)
(72) Inventor: Makaram, Raghunandan, Northborough, MA 01532 (US); Agarwal, Ishwar, Portland, OR 97229 (US); Yap, Kirk S., Westborough, MA 01581 (US); Paliwal, Nitish, Hillsboro, OR 97123 (US); Harriman, David J., Portland, OR 97210 (US); Schoinas, Ioannis T., Portland, OR 97205 (US)
(74) Representative: Samson & Partner Patentanwälte mbB

(56) References cited:
- US-A1- 2019 220 721
- INTEL: "Intel Architecture Memory Encryption Technologies Specification", 1 April 2019 (2019-04-01), XP055660915, Retrieved from the Internet <URL:https://software.intel.com/sites/default/files/managed/a5/16/Multi-Key-Total-Memory-Encryption-Spec.pdf> [retrieved on 20200122]
- STEPHEN BATES: "Deploying Persistent Memory and Acceleration via Compute Express Link", 6 August 2019 (2019-08-06), pages 1 - 19, XP055749812, Retrieved from the Internet <URL:https://www.snia.org/educational-library/deploying-persistent-memory-and-acceleration-compute-express-link-2019> [retrieved on 20201112]

## Description

### CROSS REFERENCE TO RELATED APPLICATIONS

This application claims the benefit of and priority from U.S. Provisional Patent Application No. 62/885,935 entitled "Secure Communications Over Computer Buses" and filed August 13, 2019.

### FIELD

This disclosure pertains to computing systems, and in particular (but not exclusively) to secure communications over computer buses.

### BACKGROUND

Advances in semi-conductor processing and logic design have permitted an increase in the amount of logic that may be present on integrated circuit devices. As a corollary, computer system configurations have evolved from a single or multiple integrated circuits in a system to multiple cores, multiple hardware threads, and multiple logical processors present on individual integrated circuits, as well as other interfaces integrated within such processors. A processor or integrated circuit typically comprises a single physical processor die, where the processor die may include any number of cores, hardware threads, logical processors, interfaces, memory, controller hubs, etc. As the processing power grows along with the number of devices in a computing system, the communication between sockets and other devices becomes more critical. Accordingly, interconnects, have grown from more traditional multi-drop buses that primarily handled electrical communications to full blown interconnect architectures that facilitate fast communication. Unfortunately, as the demand for future processors to consume at even higher-rates corresponding demand is placed on the capabilities of existing interconnect architectures. Interconnect architectures may be based on a variety of technologies, including Peripheral Component Interconnect Express (PCIe), Universal Serial Bus, and others. US 2019/0220721 A1 relates to data exchange between a processor and a hardware accelerator based on PCIe. A message authentication code (MAC) frequency is configurable at run time. A MAC may be sent with each transaction or e.g. for every four transactions.

### BRIEF DESCRIPTION OF THE DRAWINGS

FIG. 1 illustrates an embodiment of a computing system including an interconnect architecture.
FIG. 2 illustrates an embodiment of a interconnect architecture including a layered stack.
FIG. 3 illustrates an embodiment of a request or packet to be generated or received within an interconnect architecture.
FIG. 4 illustrates an embodiment of a transmitter and receiver pair for an interconnect architecture.
FIG. 5 illustrates an example implementation of a computing system including a host processor and an accelerator coupled by a link.
FIG. 6 illustrates an example implementation of a computing system including two or more interconnected processor devices.
FIG. 7 illustrates a representation of an example port of a device including a layered stack.
FIGS. 8A-8B illustrate example flit formats for an interconnect protocol.
FIG. 9 illustrates another example flit format for an interconnect protocol.
FIGS. 10A-10B illustrate example block diagrams for implementing encryption and integrity protection with flits of an interconnect protocol.
FIG. 11 illustrates an example embodiment of flit handling in accordance with the present disclosure.
FIGS. 12-13 illustrate block diagrams of example embodiments implementing encryption and integrity protection for CXL.cache/mem protocols.
FIGS. 14-15 illustrate flow diagrams of example processes of protecting flits in accordance with the present disclosure.
FIGS. 16-17 illustrate flow diagrams of example processes of handling protected flits in accordance with the present disclosure.
FIG. 18 illustrates an embodiment of a block diagram for a computing system including a multicore processor.
FIG. 19 illustrates an embodiment of a block for a computing system including multiple processors.

### DETAILED DESCRIPTION

In the following description, numerous specific details are set forth, such as examples of specific types of processors and system configurations, specific hardware structures, specific architectural and micro architectural details, specific register configurations, specific instruction types, specific system components, specific measurements/heights, specific processor pipeline stages and operation etc. in order to provide a thorough understanding of the present disclosure. It will be apparent, however, to one skilled in the art that these specific details need not be employed to practice embodiments of the present disclosure. In other instances, well known components or methods, such as specific and alternative processor architectures, specific logic circuits/code for described algorithms, specific firmware code, specific interconnect operation, specific logic configurations, specific manufacturing techniques and materials, specific compiler implementations, specific expression of algorithms in code, specific power down and gating techniques/logic and other specific operational details of computer system haven't been described in detail in order to avoid unnecessarily obscuring embodiments of the present disclosure.

Although the following embodiments may be described with reference to energy conservation and energy efficiency in specific integrated circuits, such as in computing platforms or microprocessors, other embodiments are applicable to other types of integrated circuits and logic devices. Similar techniques and teachings of embodiments described herein may be applied to other types of circuits or semiconductor devices that may also benefit from better energy efficiency and energy conservation. For example, the disclosed embodiments are not limited to desktop computer systems or Ultrabooks^{™}. And may be also used in other devices, such as handheld devices, tablets, other thin notebooks, systems on a chip (SOC) devices, and embedded applications. Some examples of handheld devices include cellular phones, Internet protocol devices, digital cameras, personal digital assistants (PDAs), and handheld PCs. Embedded applications typically include a microcontroller, a digital signal processor (DSP), a system on a chip, network computers (NetPC), set-top boxes, network hubs, wide area network (WAN) switches, or any other system that can perform the functions and operations taught below. Moreover, the apparatus', methods, and systems described herein are not limited to physical computing devices, but may also relate to software optimizations for energy conservation and efficiency. As will become readily apparent in the description below, the embodiments of methods, apparatus', and systems described herein (whether in reference to hardware, firmware, software, or a combination thereof) are vital to a `green technology' future balanced with performance considerations.

As computing systems are advancing, the components therein are becoming more complex. As a result, the interconnect architecture to couple and communicate between the components is also increasing in complexity to ensure bandwidth requirements are met for optimal component operation. Furthermore, different market segments demand different aspects of interconnect architectures to suit the market's needs. For example, servers require higher performance, while the mobile ecosystem is sometimes able to sacrifice overall performance for power savings. Yet, it's a singular purpose of most fabrics to provide highest possible performance with maximum power saving. Below, a number of interconnects are discussed, which would potentially benefit from aspects of the present disclosure.

One interconnect fabric architecture includes the Peripheral Component Interconnect (PCI) Express (PCIe) architecture. A primary goal of PCIe is to enable components and devices from different vendors to inter-operate in an open architecture, spanning multiple market segments; Clients (Desktops and Mobile), Servers (Standard, Rack Scale, Cloud, Fog, Enterprise, etc.), and Embedded and Communication devices. PCI Express is a high performance, general purpose I/O interconnect defined for a wide variety of future computing and communication platforms. Some PCI attributes, such as its usage model, load-store architecture, and software interfaces, have been maintained through its revisions, whereas previous parallel bus implementations have been replaced by a highly scalable, fully serial interface. The more recent versions of PCI Express take advantage of advances in point-to-point interconnects, Switch-based technology, and packetized protocol to deliver new levels of performance and features. Power Management, Quality Of Service (QoS), Hot-Plug/Hot- Swap support, Data Integrity, and Error Handling are among some of the advanced features supported by PCI Express.

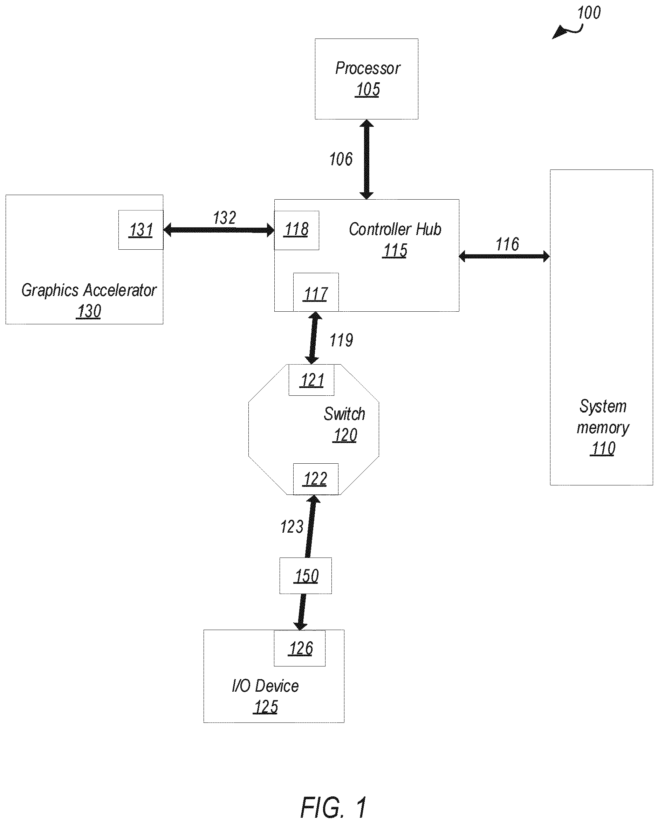

Referring to FIG. 1, an embodiment of a fabric composed of point-to-point Links that interconnect a set of components is illustrated. System 100 includes processor 105 and system memory 110 coupled to controller hub 115. Processor 105 includes any processing element, such as a microprocessor, a host processor, an embedded processor, a co-processor, or other processor. Processor 105 is coupled to controller hub 115 through front-side bus (FSB) 106. In one embodiment, FSB 106 is a serial point-to-point interconnect as described below. In another embodiment, link 106 includes a serial, differential interconnect architecture that is compliant with different interconnect standard. In some implementations, the system may include logic to implement multiple protocol stacks and further logic to negotiation alternate protocols to be run on top of a common physical layer, among other example features.

System memory 110 includes any memory device, such as random access memory (RAM), non-volatile (NV) memory, or other memory accessible by devices in system 100. System memory 110 is coupled to controller hub 115 through memory interface 116. Examples of a memory interface include a double-data rate (DDR) memory interface, a dual-channel DDR memory interface, and a dynamic RAM (DRAM) memory interface.

In one embodiment, controller hub 115 is a root hub, root complex, or root controller in a Peripheral Component Interconnect Express (PCIe or PCIE) interconnection hierarchy. Examples of controller hub 115 include a chipset, a memory controller hub (MCH), a northbridge, an interconnect controller hub (ICH) a southbridge, and a root controller/hub. Often the term chipset refers to two physically separate controller hubs, i.e. a memory controller hub (MCH) coupled to an interconnect controller hub (ICH). Note that current systems often include the MCH integrated with processor 105, while controller 115 is to communicate with I/O devices, in a similar manner as described below. In some embodiments, peer-to-peer routing is optionally supported through root complex 115.

Here, controller hub 115 is coupled to switch/bridge 120 through serial link 119. Input/output modules 117 and 121, which may also be referred to as interfaces/ports 117 and 121, include/implement a layered protocol stack to provide communication between controller hub 115 and switch 120. In one embodiment, multiple devices are capable of being coupled to switch 120.

Switch/bridge 120 routes packets/messages from device 125 upstream, i.e. up a hierarchy towards a root complex, to controller hub 115 and downstream, i.e. down a hierarchy away from a root controller, from processor 105 or system memory 110 to device 125. Switch 120, in one embodiment, is referred to as a logical assembly of multiple virtual PCI-to-PCI bridge devices. Device 125 includes any internal or external device or component to be coupled to an electronic system, such as an I/O device, a Network Interface Controller (NIC), an add-in card, an audio processor, a network processor, a hard-drive, a storage device, a CD/DVD ROM, a monitor, a printer, a mouse, a keyboard, a router, a portable storage device, a Firewire device, a Universal Serial Bus (USB) device, a scanner, and other input/output devices. Often in the PCIe vernacular, such as device, is referred to as an endpoint. Although not specifically shown, device 125 may include a PCIe to PCI/PCI-X bridge to support legacy or other version PCI devices. Endpoint devices in PCIe are often classified as legacy, PCIe, or root complex integrated endpoints.

Graphics accelerator 130 is also coupled to controller hub 115 through serial link 132. In one embodiment, graphics accelerator 130 is coupled to an MCH, which is coupled to an ICH. Switch 120, and accordingly I/O device 125, is then coupled to the ICH. I/O modules 131 and 118 are also to implement a layered protocol stack to communicate between graphics accelerator 130 and controller hub 115. Similar to the MCH discussion above, a graphics controller or the graphics accelerator 130 itself may be integrated in processor 105. Further, one or more links (e.g., 123) of the system can include one or more extension devices (e.g., 150), such as retimers, repeaters, etc.

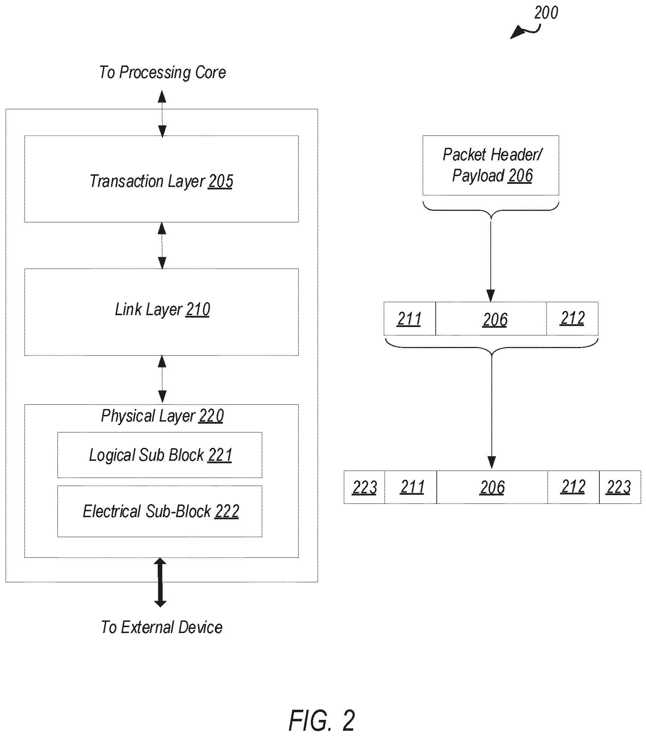

Turning to FIG. 2 an embodiment of a layered protocol stack is illustrated. Layered protocol stack 200 includes any form of a layered communication stack, such as a Quick Path Interconnect (QPI) stack, a PCIe stack, a next generation high performance computing interconnect stack, or other layered stack. Although the discussion immediately below in reference to FIGS. 1-4 are in relation to a PCIe stack, the same concepts may be applied to other interconnect stacks. In one embodiment, protocol stack 200 is a PCIe protocol stack including transaction layer 205, link layer 210, and physical layer 220. An interface, such as interfaces 117, 118, 121, 122, 126, and 131 in FIG. 1, may be represented as communication protocol stack 200. Representation as a communication protocol stack may also be referred to as a module or interface implementing/including a protocol stack.

PCI Express uses packets to communicate information between components. Packets are formed in the Transaction Layer 205 and Data Link Layer 210 to carry the information from the transmitting component to the receiving component. As the transmitted packets flow through the other layers, they are extended with additional information necessary to handle packets at those layers. At the receiving side the reverse process occurs and packets get transformed from their Physical Layer 220 representation to the Data Link Layer 210 representation and finally (for Transaction Layer Packets) to the form that can be processed by the Transaction Layer 205 of the receiving device.

### Transaction Layer

In one embodiment, transaction layer 205 is to provide an interface between a device's processing core and the interconnect architecture, such as data link layer 210 and physical layer 220. In this regard, a primary responsibility of the transaction layer 205 is the assembly and disassembly of packets (i.e., transaction layer packets, or TLPs). The translation layer 205 typically manages credit-base flow control for TLPs. PCIe implements split transactions, i.e. transactions with request and response separated by time, allowing a link to carry other traffic while the target device gathers data for the response.

In addition PCIe utilizes credit-based flow control. In this scheme, a device advertises an initial amount of credit for each of the receive buffers in Transaction Layer 205. An external device at the opposite end of the link, such as controller hub 115 in FIG. 1, counts the number of credits consumed by each TLP. A transaction may be transmitted if the transaction does not exceed a credit limit. Upon receiving a response an amount of credit is restored. An advantage of a credit scheme is that the latency of credit return does not affect performance, provided that the credit limit is not encountered.

In one embodiment, four transaction address spaces include a configuration address space, a memory address space, an input/output address space, and a message address space. Memory space transactions include one or more of read requests and write requests to transfer data to/from a memory-mapped location. In one embodiment, memory space transactions are capable of using two different address formats, e.g., a short address format, such as a 32-bit address, or a long address format, such as 64-bit address. Configuration space transactions are used to access configuration space of the PCIe devices. Transactions to the configuration space include read requests and write requests. Message space transactions (or, simply messages) are defined to support in-band communication between PCIe agents.

Therefore, in one embodiment, transaction layer 205 assembles packet header/payload 206. Format for current packet headers/payloads may be found in the PCIe specification at the PCIe specification website.

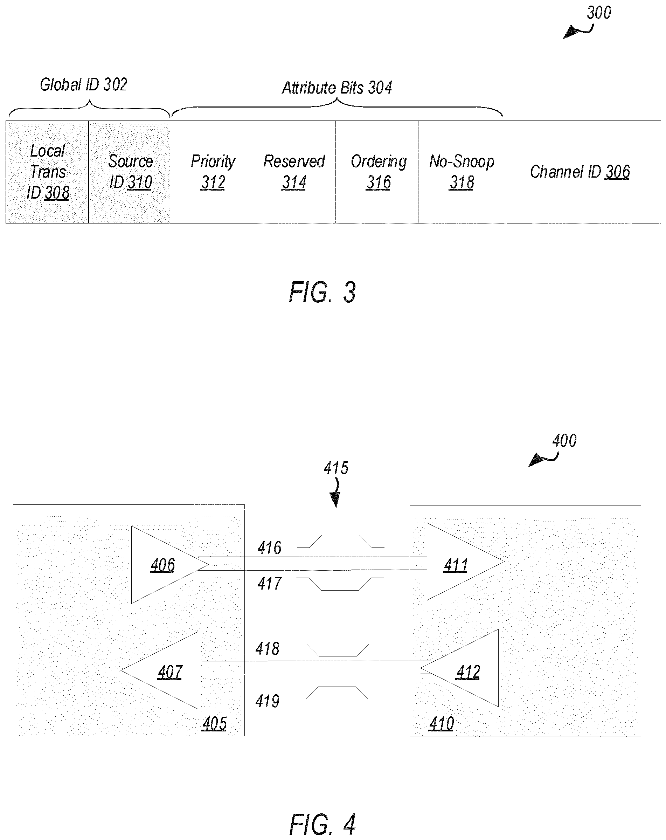

Quickly referring to FIG. 3, an embodiment of a PCIe transaction descriptor is illustrated. In one embodiment, transaction descriptor 300 is a mechanism for carrying transaction information. In this regard, transaction descriptor 300 supports identification of transactions in a system. Other potential uses include tracking modifications of default transaction ordering and association of transaction with channels.

Transaction descriptor 300 includes global identifier field 302, attributes field 304 and channel identifier field 306. In the illustrated example, global identifier field 302 is depicted comprising local transaction identifier field 308 and source identifier field 310. In one embodiment, global transaction identifier 302 is unique for all outstanding requests.

According to one implementation, local transaction identifier field 308 is a field generated by a requesting agent, and it is unique for all outstanding requests that require a completion for that requesting agent. Furthermore, in this example, source identifier 310 uniquely identifies the requestor agent within a PCIe hierarchy. Accordingly, together with source ID 310, local transaction identifier 308 field provides global identification of a transaction within a hierarchy domain.

Attributes field 304 specifies characteristics and relationships of the transaction. In this regard, attributes field 304 is potentially used to provide additional information that allows modification of the default handling of transactions. In one embodiment, attributes field 304 includes priority field 312, reserved field 314, ordering field 316, and no-snoop field 318. Here, priority sub-field 312 may be modified by an initiator to assign a priority to the transaction. Reserved attribute field 314 is left reserved for future, or vendor-defined usage. Possible usage models using priority or security attributes may be implemented using the reserved attribute field.

In this example, ordering attribute field 316 is used to supply optional information conveying the type of ordering that may modify default ordering rules. According to one example implementation, an ordering attribute of "0" denotes default ordering rules are to apply, wherein an ordering attribute of "1" denotes relaxed ordering, wherein writes can pass writes in the same direction, and read completions can pass writes in the same direction. Snoop attribute field 318 is utilized to determine if transactions are snooped. As shown, channel ID Field 306 identifies a channel that a transaction is associated with.

### Link Layer

Link layer 210, also referred to as data link layer 210, acts as an intermediate stage between transaction layer 205 and the physical layer 220. In one embodiment, a responsibility of the data link layer 210 is providing a reliable mechanism for exchanging Transaction Layer Packets (TLPs) between two components a link. One side of the Data Link Layer 210 accepts TLPs assembled by the Transaction Layer 205, applies packet sequence identifier 211, i.e. an identification number or packet number, calculates and applies an error detection code, i.e. CRC 212, and submits the modified TLPs to the Physical Layer 220 for transmission across a physical to an external device.

### Physical Layer

In one embodiment, physical layer 220 includes logical sub block 221 and electrical sub-block 222 to physically transmit a packet to an external device. Here, logical sub-block 221 is responsible for the "digital" functions of Physical Layer 221. In this regard, the logical sub-block includes a transmit section to prepare outgoing information for transmission by physical sub-block 222, and a receiver section to identify and prepare received information before passing it to the Link Layer 210.

Physical block 222 includes a transmitter and a receiver. The transmitter is supplied by logical sub-block 221 with symbols, which the transmitter serializes and transmits onto to an external device. The receiver is supplied with serialized symbols from an external device and transforms the received signals into a bit-stream. The bit-stream is de-serialized and supplied to logical sub-block 221. In one embodiment, an 8b/10b transmission code is employed, where ten-bit symbols are transmitted/received. Here, special symbols are used to frame a packet with frames 223. In addition, in one example, the receiver also provides a symbol clock recovered from the incoming serial stream.

As stated above, although transaction layer 205, link layer 210, and physical layer 220 are discussed in reference to a specific embodiment of a PCIe protocol stack, a layered protocol stack is not so limited. In fact, any layered protocol may be included/implemented. As an example, an port/interface that is represented as a layered protocol includes: (1) a first layer to assemble packets, i.e. a transaction layer; a second layer to sequence packets, i.e. a link layer; and a third layer to transmit the packets, i.e. a physical layer. As a specific example, a common standard interface (CSI) layered protocol is utilized.

Referring next to FIG. 4, an embodiment of a PCIe serial point to point fabric is illustrated. Although an embodiment of a PCIe serial point-to-point link is illustrated, a serial point-to-point link is not so limited, as it includes any transmission path for transmitting serial data. In the embodiment shown, a basic PCIe link includes two, low-voltage, differentially driven signal pairs: a transmit pair 406/412 and a receive pair 411/407. Accordingly, device 405 includes transmission logic 406 to transmit data to device 410 and receiving logic 407 to receive data from device 410. In other words, two transmitting paths, i.e. paths 416 and 417, and two receiving paths, i.e. paths 418 and 419, are included in a PCIe link.

A transmission path refers to any path for transmitting data, such as a transmission line, a copper line, an optical line, a wireless communication channel, an infrared communication link, or other communication path. A connection between two devices, such as device 405 and device 410, is referred to as a link, such as link 415. A link may support one lane - each lane representing a set of differential signal pairs (one pair for transmission, one pair for reception). To scale bandwidth, a link may aggregate multiple lanes denoted by xN, where N is any supported Link width, such as 1, 2, 4, 8, 12, 16, 32, 64, or wider. In some implementations, each symmetric lane contains one transmit differential pair and one receive differential pair. Asymmetric lanes can contain unequal ratios of transmit and receive pairs. Some technologies can utilize symmetric lanes (e.g., PCIe), while others (e.g., Displayport) may not and may even including only transmit or only receive pairs, among other examples.

A differential pair refers to two transmission paths, such as lines 416 and 417, to transmit differential signals. As an example, when line 416 toggles from a low voltage level to a high voltage level, i.e. a rising edge, line 417 drives from a high logic level to a low logic level, i.e. a falling edge. Differential signals potentially demonstrate better electrical characteristics, such as better signal integrity, i.e. cross-coupling, voltage overshoot/undershoot, ringing, etc. This allows for better timing window, which enables faster transmission frequencies.

A variety of interconnect architectures and protocols may utilize the concepts discussed herein. With advancements in computing systems and performance requirements, improvements to interconnect fabric and link implementations continue to be developed, including interconnects based on or utilizing elements of PCIe or other legacy interconnect platforms. In one example, Compute Express Link (CXL) has been developed, providing an improved, high-speed CPU-to-device and CPU-to-memory interconnect designed to accelerate next-generation data center performance, among other application. CXL maintains memory coherency between the CPU memory space and memory on attached devices, which allows resource sharing for higher performance, reduced software stack complexity, and lower overall system cost, among other example advantages. CXL enables communication between host processors (e.g., CPUs) and a set of workload accelerators (e.g., graphics processing units (GPUs), field programmable gate array (FPGA) devices, tensor and vector processor units, machine learning accelerators, purpose-built accelerator solutions, among other examples). Indeed, CXL is designed to provide a standard interface for high-speed communications, as accelerators are increasingly used to complement CPUs in support of emerging computing applications such as artificial intelligence, machine learning and other applications.

A CXL link may be a low-latency, high-bandwidth discrete or on-package link that supports dynamic protocol multiplexing of coherency, memory access, and input/output (I/O) protocols. Among other applications, a CXL link may enable an accelerator to access system memory as a caching agent and/or host system memory, among other examples. CXL is a dynamic multi-protocol technology designed to support a vast spectrum of accelerators. CXL provides a rich set of protocols that include I/O semantics similar to PCIe (CXL.io), caching protocol semantics (CXL.cache), and memory access semantics (CXL.mem) over a discrete or on-package link. Based on the particular accelerator usage model, all of the CXL protocols or only a subset of the protocols may be enabled. In some implementations, CXL may be built upon the well-established, widely adopted PCIe infrastructure (e.g., PCIe 5.0), leveraging the PCIe physical and electrical interface to provide advanced protocol in areas include I/O, memory protocol (e.g., allowing a host processor to share memory with an accelerator device), and coherency interface.

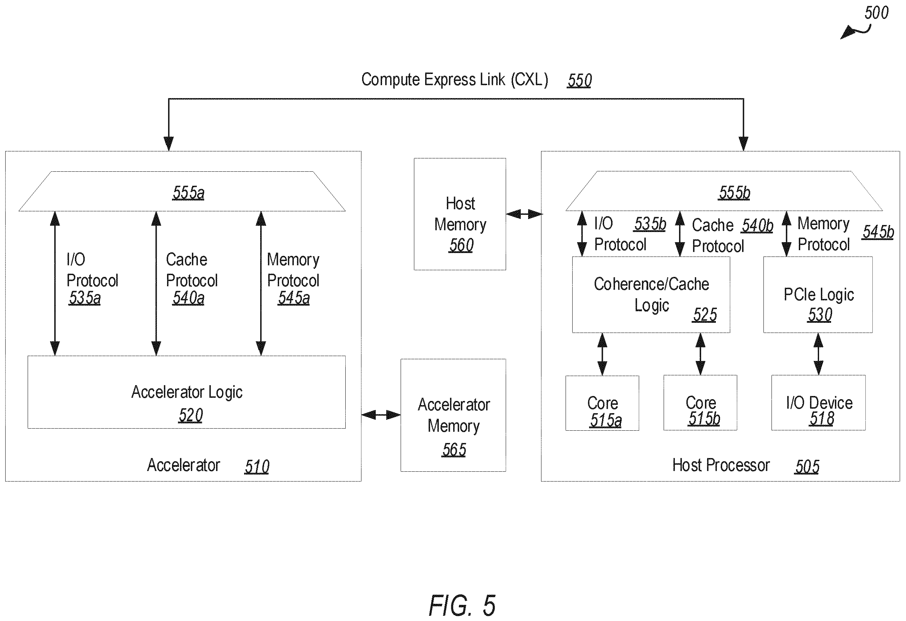

Turning to FIG. 5, a simplified block diagram 500 is shown illustrating an example system utilizing a CXL link 550. For instance, the link 550 may interconnect a host processor 505 (e.g., CPU) to an accelerator device 510. In this example, the host processor 505 includes one or more processor cores (e.g., 515a-b) and one or more I/O devices (e.g., 518). Host memory (e.g., 560) may be provided with the host processor (e.g., on the same package or die). The accelerator device 510 may include accelerator logic 520 and, in some implementations, may include its own memory (e.g., accelerator memory 565). In this example, the host processor 505 may include circuitry to implement coherence/cache logic 525 and interconnect logic (e.g., PCIe logic 530). CXL multiplexing logic (e.g., 555a-b) may also be provided to enable multiplexing of CXL protocols (e.g., I/O protocol 535a-b (e.g., CXL.io), caching protocol 540a-b (e.g., CXL.cache), and memory access protocol 545a-b (CXL.mem)), thereby enabling data of any one of the supported protocols (e.g., 535a-b, 540a-b, 545a-b) to be sent, in a multiplexed manner, over the link 550 between host processor 505 and accelerator device 510.

In some implementations, a Flex BusTM port may be utilized in concert with CXL-compliant links to flexibly adapt a device to interconnect with a wide variety of other devices (e.g., other processor devices, accelerators, switches, memory devices, etc.). A Flex Bus port is a flexible high-speed port that is statically configured to support either a PCIe or CXL link (and potentially also links of other protocols and architectures). A Flex Bus port allows designs to choose between providing native PCIe protocol or CXL over a high-bandwidth, off-package link. Selection of the protocol applied at the port may happen during boot time via auto negotiation and be based on the device that is plugged into the slot. Flex Bus uses PCIe electricals, making it compatible with PCIe retimers, and adheres to standard PCIe form factors for an add-in card.

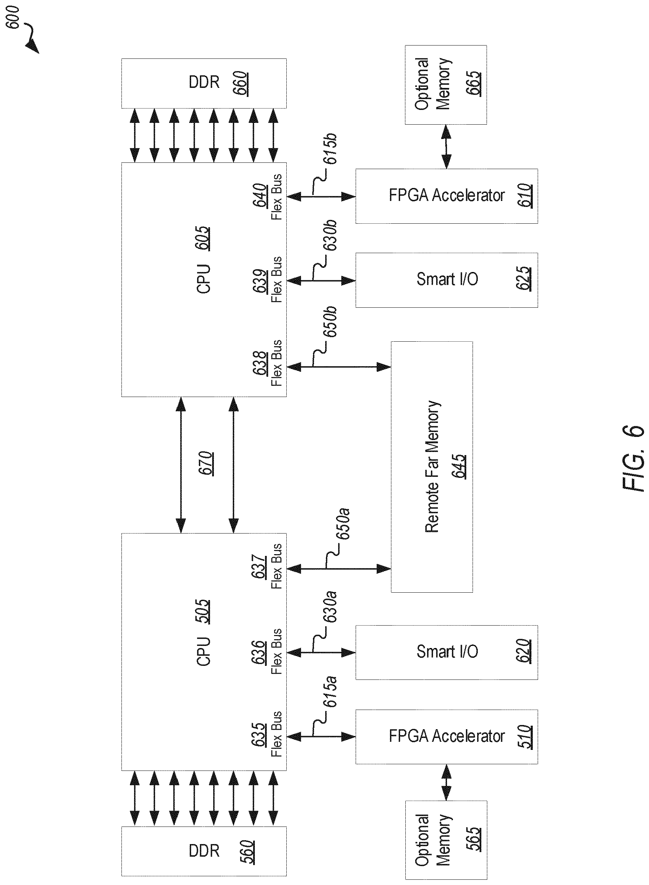

Turning to FIG. 6, an example is shown (in simplified block diagram 600) of a system utilizing Flex Bus ports (e.g., 635-640) to implement CXL (e.g., 615a-b, 650a-b) and PCIe links (e.g., 630a-b) to couple a variety of devices (e.g., 510, 610, 620, 625, 645, etc.) to a host processor (e.g., CPU 505, 605). In this example, a system may include two CPU host processor devices (e.g., 505, 605) interconnected by an inter-processor link 670 (e.g., utilizing a UltraPath Interconnect (UPI), Infinity FabricTM, or other interconnect protocol). Each host processor device 505, 605 may be coupled to local system memory blocks 560, 660 (e.g., double data rate (DDR) memory devices), coupled to the respective host processor 505, 605 via a memory interface (e.g., memory bus or other interconnect).

As discussed above, CXL links (e.g., 615a, 650b) may be utilized to interconnect a variety of accelerator devices (e.g., 510, 610). Accordingly, corresponding ports (e.g., Flex Bus ports 635, 640) may be configured (e.g., CXL mode selected) to enable CXL links to be established and interconnect corresponding host processor devices (e.g., 505, 605) to accelerator devices (e.g., 510, 610). As shown in this example, Flex Bus ports (e.g., 636, 639), or other similarly configurable ports, may be configured to implement general purpose I/O links (e.g., PCIe links) 630a-b instead of CXL links, to interconnect the host processor (e.g., 505, 605) to I/O devices (e.g., smart I/O devices 620, 625, etc.). In some implementations, memory of the host processor 505 may be expanded, for instance, through the memory (e.g., 565, 665) of connected accelerator devices (e.g., 510, 610), or memory extender devices (e.g., 645, connected to the host processor(s) 505, 605 via corresponding CXL links (e.g., 650a-b) implemented on Flex Bus ports (637, 638), among other example implementations and architectures.

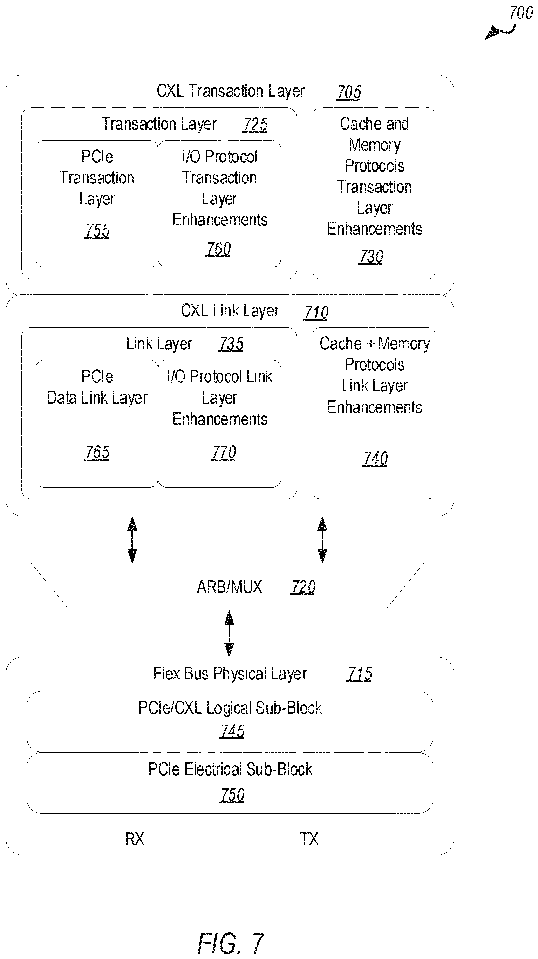

FIG. 7 is a simplified block diagram illustrating an example port architecture 700 (e.g., Flex Bus) utilized to implement CXL links. For instance, Flex Bus architecture may be organized as multiple layers to implement the multiple protocols supported by the port. For instance, the port may include transaction layer logic (e.g., 705), link layer logic (e.g., 710), and physical layer logic (e.g., 715) (e.g., implemented all or in-part in circuitry). For instance, a transaction (or protocol) layer (e.g., 705) may be subdivided into transaction layer logic 725 that implements a PCIe transaction layer 755 and CXL transaction layer enhancements 760 (for CXL.io) of a base PCIe transaction layer 755, and logic 730 to implement cache (e.g., CXL.cache) and memory (e.g., CXL.mem) protocols for a CXL link. Similarly, link layer logic 735 may be provided to implement a base PCIe data link layer 765 and a CXL link layer (for CXl.io) representing an enhanced version of the PCIe data link layer 765. A CXL link layer 710 may also include cache and memory link layer enhancement logic 740 (e.g., for CXL.cache and CXL.mem).

Continuing with the example of FIG. 7, a CXL link layer logic 710 may interface with CXL arbitration/multiplexing (ARB/MUX) logic 720, which interleaves the traffic from the two logic streams (e.g., PCIe/CXL.io and CXL.cache/CXL.mem), among other example implementations. During link training, the transaction and link layers are configured to operate in either PCIe mode or CXL mode. In some instances, a host CPU may support implementation of either PCIe or CXL mode, while other devices, such as accelerators, may only support CXL mode, among other examples. In some implementations, the port (e.g., a Flex Bus port) may utilize a physical layer 715 based on a PCIe physical layer (e.g., PCIe electrical PHY 750). For instance, a Flex Bus physical layer may be implemented as a converged logical physical layer 745 that can operate in either PCIe mode or CXL mode based on results of alternate mode negotiation during the link training process. In some implementations, the physical layer may support multiple signaling rates (e.g., 8 GT/s, 16 GT/s, 32 GT/s, etc.) and multiple link widths (e.g., x16, x8, x4, x2, x1, etc.). In PCIe mode, links implemented by the port 700 may be fully compliant with native PCIe features (e.g., as defined in the PCIe specification), while in CXL mode, the link supports all features defined for CXL. Accordingly, a Flex Bus port may provide a point-to-point interconnect that can transmit native PCIe protocol data or dynamic multi-protocol CXL data to provide I/O, coherency, and memory protocols, over PCIe electricals, among other examples.

The CXL I/O protocol, CXL.io, provides a non-coherent load/store interface for I/O devices. Transaction types, transaction packet formatting, credit-based flow control, virtual channel management, and transaction ordering rules in CXL.io may follow all or a portion of the PCIe definition. CXL cache coherency protocol, CXL.cache, defines the interactions between the device and host as a number of requests that each have at least one associated response message and sometimes a data transfer. The interface consists of three channels in each direction: Request, Response, and Data.

The CXL memory protocol, CXL.mem, is a transactional interface between the processor and memory and uses the physical and link layers of CXL when communicating across dies. CXL.mem can be used for multiple different memory attach options including when a memory controller is located in the host CPU, when the memory controller is within an accelerator device, or when the memory controller is moved to a memory buffer chip, among other examples. CXL.mem may be applied to transaction involving different memory types (e.g., volatile, persistent, etc.) and configurations (e.g., flat, hierarchical, etc.), among other example features. In some implementations, a coherency engine of the host processor may interface with memory using CXL.mem requests and responses. In this configuration, the CPU coherency engine is regarded as the CXL.mem Master and the Mem device is regarded as the CXL.mem Subordinate. The CXL.mem Master is the agent which is responsible for sourcing CXL.mem requests (e.g., reads, writes, etc.) and a CXL.mem Subordinate is the agent which is responsible for responding to CXL.mem requests (e.g., data, completions, etc.). When the Subordinate is an accelerator, CXL.mem protocol assumes the presence of a device coherency engine (DCOH). This agent is assumed to be responsible for implementing coherency related functions such as snooping of device caches based on CXL.mem commands and update of metadata fields. In implementations, where metadata is supported by device-attached memory, it can be used by the host to implement a coarse snoop filter for CPU sockets, among other example uses.

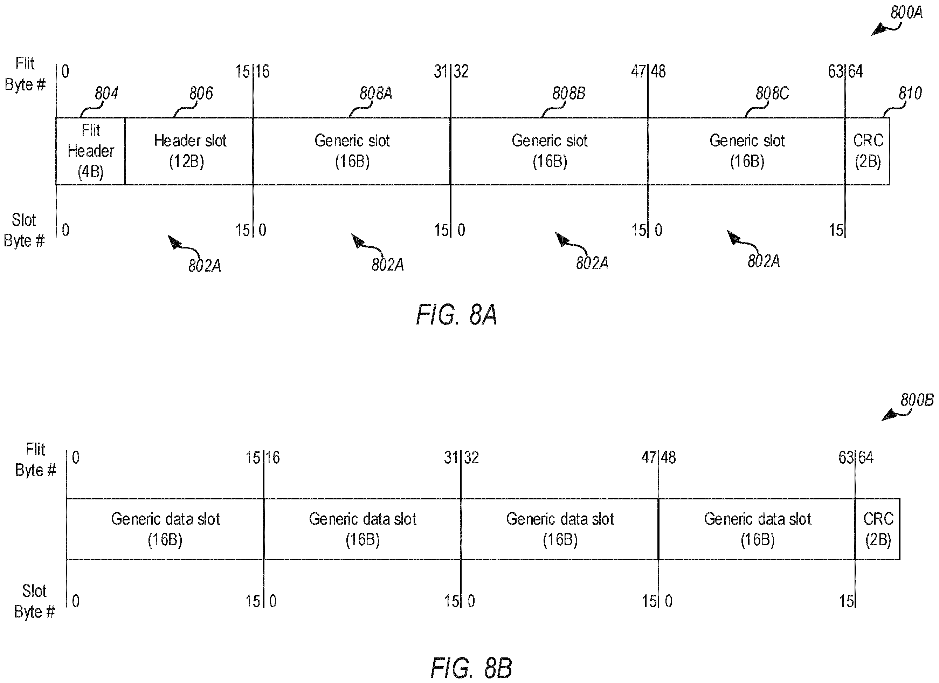

FIGS. 8A-8B illustrate example flit formats for an interconnect protocol. A flit may refer to a link layer data packet formatted for use over interconnect links (e.g., PCIe-based or CXL-based links). In some implementations, the CXL.cache and CXL.mem protocols may utilize flits formatted in the same or similar manner as the example flits 800 shown in FIGS. 8A-8B. In particular, in some instances, the CXL.cache and CXL.mem protocols may utilize "Protocol Flits" formatted as shown in FIG. 8A, wherein the flit 800A includes 528-bits consisting of four slots 802 of 16 bytes each. The first slot 802A includes a 4-byte flit header slot 804 and a 12-byte header slot 806, while the remaining slots 802B, 802C, 802D are considered generic slots 808. The header slot 806 may carry a header of link-layer specific information, including the definition of the protocol-level messages contained in the rest of the header as well as in the other slots in the flit. The generic slots 808 may hold one or more small CXL.cache messages. In other instances, the CXL.cache and CXL.mem protocols may utilize "All Data Flits" formatted as shown in FIG. 8B, wherein the flit 800B contains four 16-byte generic data slots instead of the slots shown in the flit 800A of FIG. 8A. In such instances, the generic data slots may carry 16 bytes of data only, without header information. For example, four generic data slots of an "All Data Flit" may be utilized to transfer a 64-byte cache line. In either case, an additional 2-byte CRC (cyclical redundancy check) code (e.g., 810) corresponding to the information in the flit may be transmitted along with the flit 800. The CRC code may be generated based on certain information in the flit and may be utilized for error checking or for other purposes.

In current CXL link implementations, data transiting the link will not be cryptographically protected. Aspects of the present disclosure, however, provide for techniques to protect communications across CXL links from adversaries, for example, by providing confidentiality, integrity, and replay protection, e.g., for CXL.cache and CXL.mem traffic transiting the link. The architecture, methods, and other techniques described herein may provide for protection of all traffic transiting a CXL link. For instance, in particular embodiments, all protocol flits may be encrypted and integrity protected, while low level control flits are not encrypted or integrity protected. The protection offered by the techniques in this disclosure may secure CXL-based communications while ensuring one or more of: (a) full link layer bandwidth support, (b) minimum bandwidth and latency overhead of link protection, and (c) use of standard-based crypto algorithms.

Aspects of the present disclosure may implement a security model as follows. The security modem may include the following assets: (1) transactions (data + metadata) communicated between the two sides of the physical link (with the agents that on each side of the physical link being in the trust boundary of the respective devices/hardware blocks they live in), and (2) symmetric cryptographic keys used to provide confidentiality, integrity and replay protection. Any suitable certificates and asymmetric keys used for device authentication (and corresponding key exchange protocols) may be used. Device attestation and key exchange definitions may define the security model for those assets. Further, in some embodiments, the Trusted Compute Base (TCB) may include (1) hardware blocks on each side of the link that implement the link encryption and integrity; (2) agents that are used to configure the crypto engines (e.g., trusted firmware/software agent and/or security agent hardware and firmware that implement key exchange protocol or facilitate programming of the keys); and (3) otherhardware blocks in the device that may have access to the assets directly or indirectly, including those that perform operations such as reset, debug, and link power management. Because, CXL.cache/mem is envisioned to be point-to-point protection in certain implementations, switches will be in TCB as well. In certain embodiments, adversaries and threats may include: (1) threats from physical attacks on links, including cases where an adversary can examine data intended to be confidential, modify data or protocol meta-data, record and replay recorded transactions, reorder and/or delete data flits, inject transactions including requests/data or non-data responses, using lab equipment, purpose-built interposers, or malicious Extension Devices; and (2) threats arising from physical replacement of a trusted device with an untrusted one, and/or removal of a trusted device and accessing it with a system that is under adversaries' control.

In particular embodiments of the present disclosure, all protocol flits will be encrypted an integrity protected (e.g., 32 bits of a flit header in slot 0 will not be encrypted but will be integrity protected, while the rest of the content of slots 0/1/2/3 are encrypted and integrity protected, as described further below), while low level control flits and flit CRCs are not encrypted or integrity protected (i.e., there may be no confidentiality, integrity or replay protection for these flits). Link CRC codes may be computed based on the encrypted portions of flits. In some embodiments, link retries may occur first, and only flits that pass link error/CRC checks will be further decrypted and/or integrity checked. If the integrity check fails, it may result in future secured traffic getting dropped. In some embodiments, Multi-Data Header capabilities may be supported. This may allow for packing of multiple (e.g., up to 4) data headers into a single slot, with subsequent 16 slots including all data.

Additionally, in some embodiments, an Advanced Encryption Standard (AES)-based protocol may be used for encrypting data and/or for integrity. For example, in some cases, AES-GCM may be utilized to provide authenticated encryption and integrity protection. In other cases, AES-CTR mode encryption may be utilized for confidentiality protection with AES-GMAC being utilized for integrity and replay protection. The encryption protocols may utilize any suitable bit-length encryption standard, e.g., 256-bit or 128-bit -based protocols. Further, key refreshes may occur without any loss of data. Key refresh may be needed for at least the following example reasons: (1) when a device moves from one virtual machine (VM) or process to a different one (e.g., accelerator-type device usages); or (2) crypto considerations (e.g., key wear-out) may require moving to a new key (such as for long running devices or devices that are part of platform). Key refresh may be expected to occur infrequently in certain implementations.

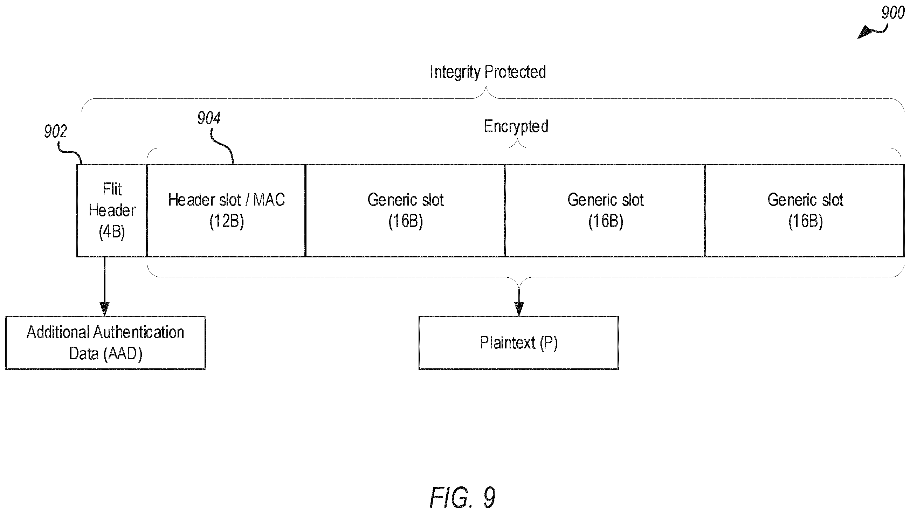

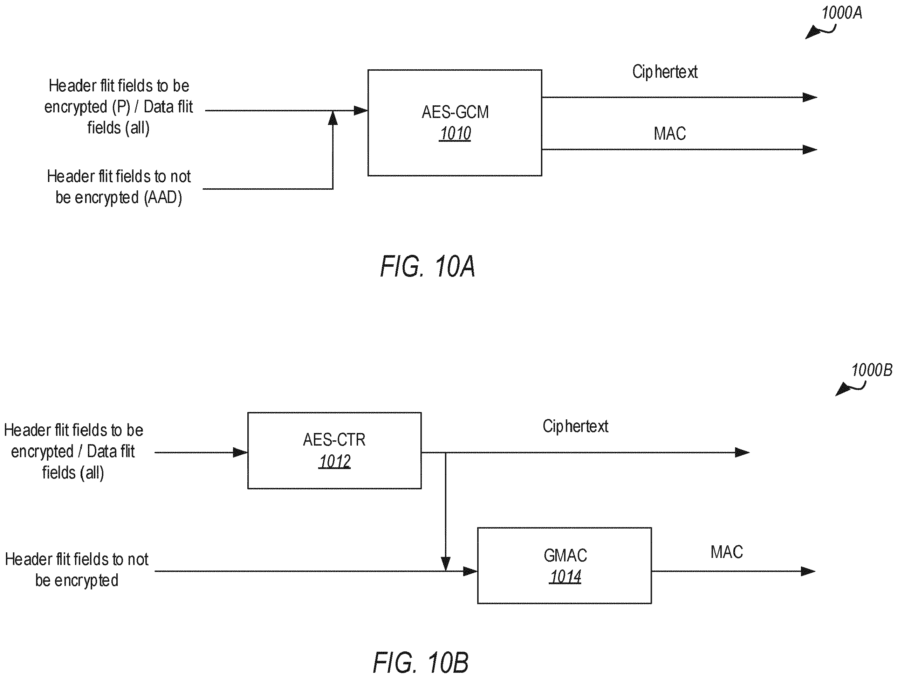

Turning to FIG. 9, another example flit 900 is shown. The example flit 900 is formatted similar to the flit 800A of FIG. 8A. In some instances, the 12-byte portion (904) of the first slot of the flit 900 (e.g., 806 of the flit 800A in FIG. 8A) may be utilized to carry header slot information, while in other instances, the 12-byte portion of the first slot of the flit 900 may be utilized to carry a message authentication code (MAC). As shown in FIG. 9, in certain aspects of the present disclosure, only a portion of the flit 900 may be encrypted (e.g., the portions other than the flit header 902), but the entirety of the flit 900 may still be integrity protected. In implementations utilizing AES-GCM authenticated encryption, the 4-byte flit header 902 may be considered as the Additional Authenticated Data (AAD) input to the AES-GCM protocol while the remainder of the flit 900 may be considered as the Plaintext (P) input to the AES-GCM protocol. Where AES-GMAC is utilized for integrity protection, the entirety of the flit 900 may be utilized as AAD input (while only the portion other than 902 is provided as input to the encryption protocol used, e.g., AES-CTR). For instance, FIGS. 10A-10B illustrate example block diagrams for implementing encryption and integrity protection with flits of an interconnect protocol, such as flit 900.

In the example system 1000A shown in FIG. 10A, all fields of the flit 900 are passed as input to the AES-GCM protocol implementation block 1010 (which may include hardware circuitry and/or software for implementing the AES-GCM protocol). The flit header field portion 902 is passed as Additional Authentication Data (AAD) input and the remaining portion of the flit 900 is passed as Plaintext (P) input to the AES-GCM block, which produces as output encrypted ciphertext (which is the same bit length as the plaintext (P) input) and a message authentication code (MAC) (which may be used for integrity checking). For All Data flits, the entirety of the flit is passed to the AES-GCM block as Plaintext (P) input, and no AAD input is provided.

In the example shown in FIG. 10B, the portions of the flit 900 other than 902 are passed to the AES-CTR protocol implementation block 1012 (which may include hardware circuitry and/or software for implementing the AES-CTR protocol), which produces encrypted ciphertext of the same bit length as the input. The ciphertext is provided as input along with the flit header field portion 902 to the GMAC implementation block 1014 (which may include hardware circuitry and/or software for implementing the GMAC protocol), which produces a message authentication code (MAC) to be used for integrity checking. For All Data flits, the entirety of the flit is passed to the AES-CTR block, and the encrypted ciphertext is the only input provided to the GMAC implementation block 1014.

In certain implementations, at least two integrity configurations may be supported: a deterministic containment configuration and a skid mode configuration. In the deterministic containment configuration, the flit data may only be released for further processing after an integrity check passes. This mode may have both latency and bandwidth impact. For example, the latency impact may be due to the need to buffer several flits until the integrity value has been received and checked, while the bandwidth impact may come from the fact that integrity value will be sent quite frequently. The deterministic containment mode may be available when a flit count parameter (e.g., "skid_mode_flit_count") is set to the lowest possible setting (e.g., "containment_flit_count value").

In the skid mode configuration, the flit data may be released for further processing without waiting for the integrity value to be received and/or checked. This may allow for less frequent transmission of integrity value (e.g., MACs) and may allow for near zero latency overhead and very low bandwidth overhead. In some cases, data modified by an adversary may potentially be consumed by software, but such attacks would be subsequently detected when the integrity value is received and checked. The skid mode configuration may allow for tuning of the bandwidth overhead of carrying the MAC. This may be accomplished in some embodiments by setting the flit count parameter (e.g., "skid_mode_flit_count" above) in the range of the smallest value (e.g., "containment_flit_count" above) up to particular value (e.g., 255).

In some implementations, a "Crypto Disable" mode may be supported, where the cryptography functionality is disabled. This may be implemented as a boot-time configuration, since there may be no expectation for it to be possible to move from such a mode to one of the other modes described above without reset.

In some implementations, an "Encryption Only" mode may be supported. In this mode, a MAC or other integrity value may never be sent across the link or checked on the receiver. This can be accomplished by setting the flit count parameter (e.g., "skid_mode_flit_count" above) equal to zero (0).

Table 1 below describes potential latency and bandwidth impacts for different modes of operation as compared to the legacy mode of operation (where cryptographic protection is disabled). The impacts below This analysis assume one 64-byte flit is processed every cycle by a crypto engine and two cycles for integrity computation and checking.

**Table 1: Potential Latency and Bandwidth Impacts for Different Modes of Operation**

| **Mode** | **Latency Impact** | **Bandwidth Impact** | **Comments** |
|---|---|---|---|
| Disable Crypto Engine | none | none | Legacy mode, no encryption |
| Deterministic containment | 8 cycles (6 flit transmit/receive + 2 cycles for integrity checking) | 5% (16 bytes per 5 flits) | SKID_MODE_FLIT_COUNT = 5 (deterministic containment) |
| Skid Mode | None (non-blocking) | ∼0.2% (128 flits) | Implementations may optionally allow other settings |
| | | ∼0.1% (255 flits) | |

In certain implementations, each port will enumerate the different modes it supports and the range of allowed values for the containment_flit_count and skid_mode_flit_count parameters. Further, in many cases, devices that support functionality described herein may support at least the crypto disable mode and the deterministic containment mode. The operating mode and the settings for containment_flit_count and skid_mode_flit_count may be negotiated by the devices on the link.

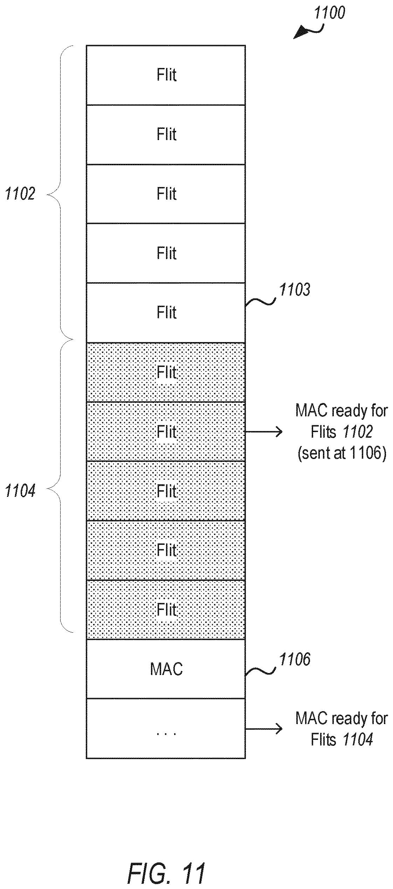

FIG. 11 illustrates an example embodiment of flit handling in accordance with the present disclosure. In the deterministic containment mode of operation, a transmitting device may accumulate an integrity value over a particular predetermined number of flits (e.g., containment_flit_count described above), and the transmitter may send the flit containing this integrity value (e.g., MAC) at the earliest possible time. There may be a delay between the transmission of last flit that was part of an integrity computation and the actual transmission of the MAC flit. In some cases, this delay may be bounded to be at most 5 flits. On the receive side, flits cannot be released for consumption in this mode of operation until the flit that contains the integrity value (e.g., MAC) for those flits has been received and the integrity value has been checked. Since there can be a delay in the transmission of MAC flit during which time valid flits continue to be sent, the receiver may buffer the subsequent flits as well to ensure there is no loss of data.

In the example shown in FIG. 11, the containment_flit_count value is set to 5 flits. A first set of five flits (1102) of the flit stream 1100 will be used to generate a first MAC value (in flit 1106), and a second set of five flits (1104) will be used to generate a second MAC value. Further, in the example shown, there is two flit latency in the transmitter preparing the MAC flit. Thus, the MAC flit 1106 for the first set of flits 1102 will only be ready to transmit after 2 flits of the second set of flits 1104 have been generated or transmitted. In the example shown, the first flit of the set of flits 1104 is a multi-header flit, so the transmission of the MAC flit needs to be delayed until slot 0 opens up. The earliest point at which the MAC flit 1106 (for the flits 1102) can be transmitted is accordingly 5 flits after the last flit 1103 that was part of the integrity value encapsulated in that MAC flit. On the receiver side of the link, both sets of flits 1102 and 1104 are queued or buffered until the MAC flit 1106 is received and an integrity check passes. Once the MAC flit 1106 is received, the receiver verifies the integrity based at least in part on the MAC value, and if the integrity check passes, the first set of flits 1102 can be released for consumption. Likewise, the second set of flits 1104 will be released for consumption until another MAC flit for those flits has been received and the integrity check has passed. If the integrity check fails, then the receiver will log an error or signal a fatal error, and may drop all queued/buffered flits.

In the skid mode of operation, a transmitter device may accumulate an integrity value over a predetermined number of flits (e.g., skid_mode_flit_count), and may send the MAC flit containing this integrity value at the earliest possible time. There may be a delay between the transmission of last flit that was part of integrity computation and the actual transmission of the MAC flit. Such a delay may be bounded to be at most 5 flits in some instances. In the skid mode of operation, the receiver may release flits for consumption as soon as they are received. The integrity value (e.g., MAC) will be accumulated over the received flits up to the predetermined number of flits (e.g., skid_mode_flit_count) and the integrity check may be performed upon receipt of the MAC flit. As noted before in the example related to FIG. 11, the MAC flit may arrive up to 5 flits after the transmission of the last flit that was part of that MAC determination (e.g., flit 1103 for MAC flit 1106 in FIG. 11). Thus, the receiver may allow for flits belonging to the next MAC determination (e.g., flits 1104 in FIG. 11) to be received and consumed.

In some cases, the link may be ready to go idle prior to the transmission of MAC flit. This can happen, for example, when there is less than a predetermined number of flits (i.e., skid_mode_flit_count or containment_flit_count) to be transmitted. In such cases, before the transmitter side of link can be ready to go idle, it may ensure that a MAC flit is first transmitted for any flits that have been previously sent. This may involve injecting placeholder flits (e.g., MAC_NOPs or IDE idle flits) until the predetermined number of flits (e.g., skid_mode_flit_count or containment_flit_count) is reached or sending an early MAC termination indication. Once the transmitter sends out the MAC flit for all previous flits, the link can then go idle. The receiver may only go idle after the MAC flit corresponding to previous in-flight flits has been received and verified. MAC flits may use a 0b110 (H6) slot type indication in the header, and may be sent in Slot0 of the flit (e.g., 802A of flit 800A of FIG. 8A) and can use all of slot0 except for the initial 32 bits used for flit header (e.g., 804 of slot 802A of flit 800A of FIG. 8A). Thus, there are 96 bits available for the MAC to be set. The MAC may include an integrity value for a set of previously sent flits.

In some cases, a start indication (e.g., "start_indication) may be sent by a transmitter on the link to trigger a switch on the receiver side to a new set of keys (e.g., encryption and/or MAC keys). The start indication may be set via a control flit, which may be unencrypted.

Since MACs may only be sent periodically in certain implementations, there may be cases where the MAC is not yet sent out (because the predetermined number of flits, e.g., skid_mode_flit_count, has not yet been sent), but the link goes idle as there is no more data to transmit. One option to address this may include sending a placeholder flit (e.g., a "MAC_NOP" flit using a LLCRD Flit encoding with subtype = Security). The placeholder flit may include an indication that a MAC transmission is pending but there is no data to transmit. Another option may include terminating the MAC early and sending a Truncated MAC Flit. In this case, (i.e. MAC terminated prior to the predetermined of flits, e.g., skid_mode_flit_count) a truncated MAC flit may be sent. The truncated MAC flit may be a LLCTRL flit containing the MAC. This option may allow the receiver to know that the MAC is terminating early. In addition, since there is no partial MAC computation in progress on either side, the two sides can go idle without needing to maintain lots of additional internal state.

In some cases, a set of keys for decryption and/or integrity checking (e.g., MAC generation) may be pre-programmed into registers of the devices on the link. For instance, each port may expose key programming registers to program the keys. These keys may be programmed as "backup" keys, in the sense that they are just values programmed into registers and are not yet active. For instance, the keys may be exchanged/configured into the port while the link is using a previously configured set of keys. The new keys may accordingly not take effect until certain actions are taken. As one example, after keys have been programmed into "backup" registers on both sides of link, there may be a write to the transmitter to trigger sending of a start indication flit as described above. This start indication may be carried as part of the MAC flit slot (e.g., 904 of FIG. 9) with an additional bit to indicating the setting of start. After the start indication has been sent, all future flits sent by the transmitter side will be protected by new keys, after a configurable time (e.g., a "KeyRefreshTime" parameter) to make sure the receiver is ready to receive/decrypt/integrity check with the new keys. The KeyRefreshTime parameter granularity may be based on a number of flits. In some cases, a default value for the KeyRefreshTime parameter may be 64 flits. The transmitter may send idle flits for the number of flits specified by the KeyRefreshTime parameter. The idle flits may be unencrypted and not integrity protected. After receiving the start indication flit, the receiver may switch to using the new keys. There may be a latency for the receiver to prepare to receive the flits protected with new key. The KeyRefreshTime parameter in the transmitter may to be configured such that it is always higher than a worst-case latency in the receiver to obtain the new keys.

Error handling may be performed for flits based on the CRC codes generated and sent by the transmitter. Errors may occur in the data or header portions, and it may be unfeasible to contain or locate the source of an error. Integrity failures may be logged in the error reporting registers and an error may be signaled in response. In the deterministic containment mode of operation, any buffered flits may be dropped and all subsequent secure traffic may be dropped until the link is reset. In some cases, the device may clear out any stored data/state or have access control measures implemented to prevent leakage of stored information. In some cases, a MAC flit may be received when the link is not in a secure mode of operation or when it is not expected. In these instances, receipt of the MAC flit may be treated similar to an integrity failure.

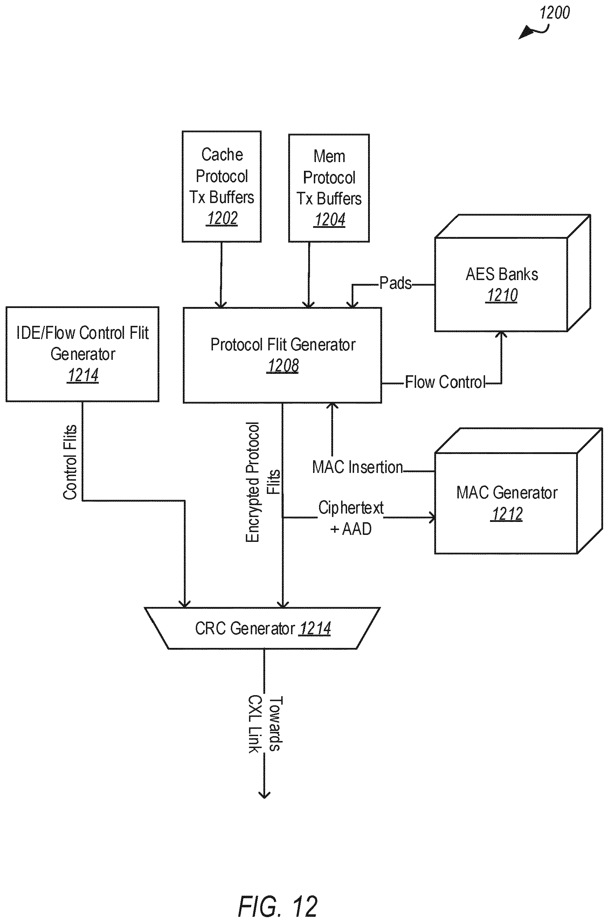

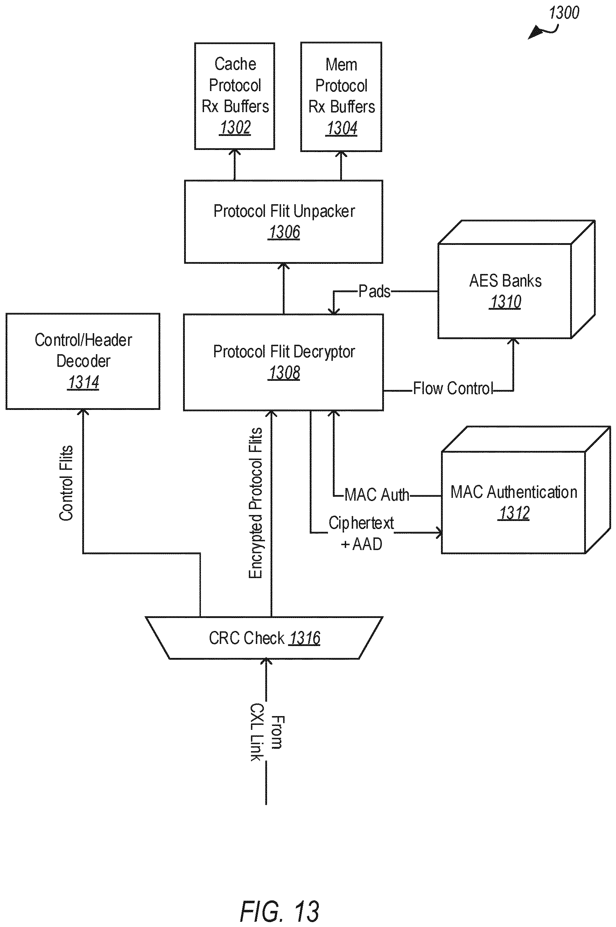

FIGS. 12-13 illustrate block diagrams of example embodiments implementing encryption and integrity protection for CXL-based protocols, such as CXL. cache and/or CXL.mem protocols. In particular, FIG. 12 illustrates an example embodiment for implementing CXL IDE in the CXLCM Data Link Layer module's Transmit Pipeline, while FIG. 13 illustrates an example embodiment for implementing CXL IDE in the CXLCM Data Link Layer module's Receive Pipeline. One or more aspects of the systems shown in FIGS. 12-13 may be implemented in hardware circuitry, firmware, software, or a combination thereof. For instance, certain aspects shown in FIGS. 12-13 may be implemented as part of circuitry that is to implement one or more layers of a CXL-based protocol. Although certain components/blocks are shown and described below with respect to the examples shown, other embodiments for implementing the aspects of the present disclosure may be utilized as well.

Referring to FIG. 12, the system 1200 includes cache and mem protocol buffers 1202, 1204 (respectively). The CXLCM protocol may include CXL. cache and CXL.mem protocol messages as described above, and the buffers 1202, 1204 may be transmit buffers that may funnel protocol level messages into a flit packetizer module such as the protocol flit generator 1208. The protocol flit generator 1208 may be responsible for forming or otherwise generating CXLCM protocol flits and for interacting with other modules for encrypting the flits (or portions thereof). Once messages leave the buffers 1202, 1204, they are packed together to form plaintext. This protocol flit generator 1208 works with (e.g., masters) the AES banks 1210, which supply pad values to eventually form ciphertext within the protocol flit generator 1208. The MAC generator 1212 accepts the AAD (e.g., the flit header portion, such as 902 of FIG. 9) and ciphertext from the protocol flit generator 1208 and computes a message authentication code (MAC) tag value. In some cases, this may include performing mathematical operations to generate an authentication code. The MAC generator 1212 may interact with the protocol flit generator 1208 to embed the MAC tag value in outbound protocol flits. The IDE/Flow Control Flit Generator 1214 may include logic or other circuitry associated with CXLCM IDE Control flit insertion. In the example shown, all control flits generated by this block are neither encrypted nor integrity protected (as outlined in the CXL IDE definition). The CRC Generator 1214 may be responsible for multiplexing between Control and Encrypted Protocol flits generated by the generators 1214 and 1208, respectively. The CRC generator 1214 may compute CRC codes for link error protection and may be responsible for shifting CXLCM flits towards the Physical CXL Link.

Referring to FIG. 13, the system 1300 includes a CRC check module 1316 that is responsible for calculating CRC values on incoming flits to protect against link errors and performing error checks. Flits may not be passed through for further processing if the CRC fails the error check. If the CRC passes the error check, the CRC check module 1316 may de-multiplex between the Control and Encrypted Protocol flits described above with respect to FIG. 12. The Control/Header Decoder 1314 may include hardware circuitry or logic associated with CXLCM IDE Control flit decoding and Flit Header decoding for Protocol Flits. In some implementations, the control flits and Protocol Flit's Flit Header portion received by the decoder 1314 may be neither encrypted nor integrity protected (as outlined in the CXL IDE definition). The Protocol Flit Decryptor 1308 may be responsible for decryption of incoming CXLCM protocol flits and may interact with (e.g., act as a master to) the AES banks 1310 and MAC authentication block 1312 for associated computations and checks. The AES banks 1310 may supply pad values as shown, which are used to decrypt the ciphertext portions of incoming flits. The MAC Authentication block 1312 accepts the AAD and ciphertext portions of the incoming flits and uses that information for MAC Tag value computation. The MAC Authentication block 1312 performs mathematical operations to generate and verify authentication codes and performs MAC Tag comparisons. If the MAC Tag comparison fails, this block flags a violation which may then be used in 'upper' link layer modules to take appropriate actions. The Protocol Flit Unpacker 1306 may be responsible for unpacking the decrypted plaintext of the CXLCM protocol flits by unpacking (e.g., de-multiplexing) them between Cache and Mem traffic classes and then passing the information to the appropriate buffer 1302 or 1304. Once the messages leave the Protocol Flit Unpacker 1306, they may be registered in the buffers 1302, 1304, and may be dispatched to upstream logic for further processing as appropriate.

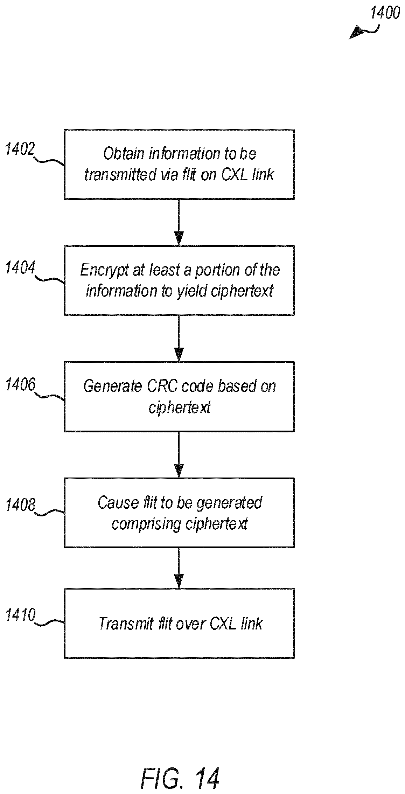

Turning to FIGS. 14-17, flow diagrams of example processes of protecting flits in accordance with the present disclosure are shown. Operations in the example processes may be performed by components of a device that transmits or receives flits over an interconnect link (e.g., PCIe or CXL link). In some embodiments, a computer-readable medium may be encoded with instructions (e.g., a computer program) that implement one or more of the operations in the example processes. The example processes may include additional or different operations, and the operations may be performed in the order shown or in another order. In some cases, one or more of the operations shown in FIGS. 14-17 are implemented as processes that include multiple operations, sub-processes, or other types of routines. In some cases, operations can be combined, performed in another order, performed in parallel, iterated, or otherwise repeated or performed another manner.

FIGS. 14-15 illustrate flow diagrams of example processes 1400, 1500 of protecting flits in accordance with the present disclosure. Referring to FIG. 14, an example flit encryption process 1400 is shown. At 1402, information to be transmitted via a flit over a link based on a CXL-based protocol (e.g., CXL.cache or CXL.mem) is obtained by a sender agent of a device. The information may include header information for a flit header field (e.g., 902 of FIG. 9) or other information to go in one or more other fields of a flit (e.g., 904 of FIG. 9 or 808 of FIG. 8A). The flit may include 528 bits. In some cases, the flit may be formatted as a Header flit (e.g., 800A of FIG. 8A), with a header field that includes 32 bits of the 528 bits. In other cases, the flit may be formatted as an All Data flit with equal 16-byte slots (e.g., 800B of FIG. 8B).

At 1404, at least a portion of the information is encrypted to yield ciphertext. In some cases, the information corresponding to portions of a flit other than the flit header is to be encrypted, while the flit header portion (e.g., 902 of FIG. 9, for a Header flit) is not to be encrypted. In other cases, the entire information to be included in the flit is to be encrypted (e.g., for All Data flits). The information may be encrypted based on an Advanced Encryption Standard (AES)-based protocol, such as, for example, the AES Galois/Counter Mode (AES-GCM) protocol or AES Counter Mode (AES-CTR) protocol.

At 1406, a CRC code is generated based on the ciphertext generated at 1404. The CRC code may be generated using any suitable technique, such as those described in a CXL-related specification. At 1408, the sender agent causes a flit to be generated that includes the ciphertext, and at 1410, the flit and CRC code are transmitted to another device or apparatus over the CXL-based link (e.g., by a port that includes circuitry to implement one or more layers of the CXL-based protocol).

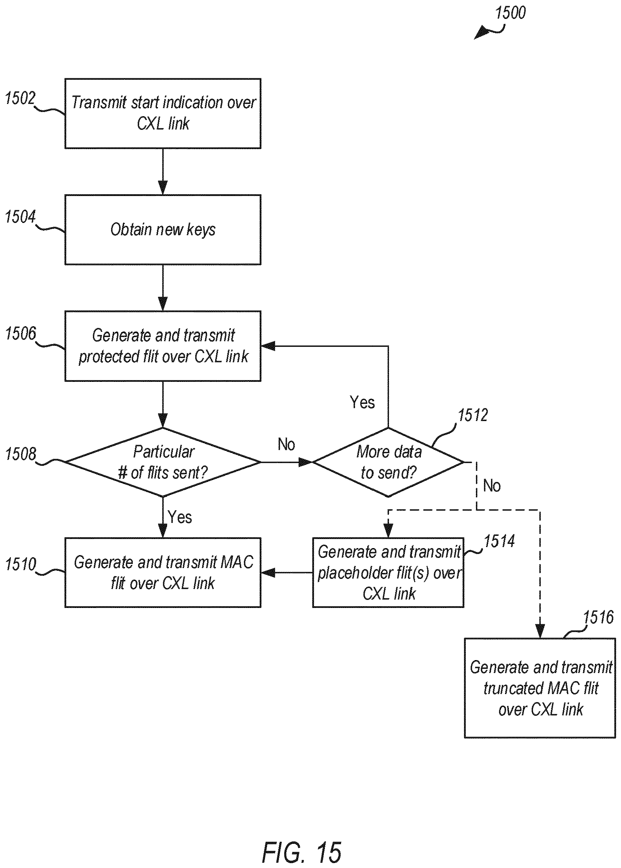

Referring to FIG. 15, an example integrity protection process 1500 is shown. At 1502, a start indication is transmitted over a link based on a CXL-based protocol (e.g., CXL.cache or CXL.mem). The start indication may be generated by a sender agent and transmitted by a device port via an unencrypted control flit sent over the link. At 1504, a set of new keys may be obtained based on the transmission of the start indication. The new keys may include a new encryption key for encrypting information in subsequently-sent flits, a new key for MAC generation, or another type of key used in the encryption and/or integrity protection process. At 1506, a protected flit is generated and transmitted over the CXL-based link. This may include one or more operations of the example process 1400 described above.

At 1508, it is determined whether a particular number of flits have been sent over the link. The particular number of flits may be based on a set parameter, such as the skid_mode_flit_count or containment_flit_count parameters described above. If the particular number of protected flits have been sent, then the agent, at 1510, may generate a MAC flit comprising an integrity value (e.g., MAC code) that is based on a number of previously-transmitted flits equal to the particular number indicated by the parameter (e.g., as described above with respect to FIG. 11). The integrity value (e.g., MAC code) of the MAC flit may be generated based on one of an Advanced Encryption Standard Galois/Counter Mode (AES-GCM) protocol and an Advanced Encryption Standard Galois Message Authentication Code (AES-GMAC) protocol. The MAC flit may then be transmitted by the port over the CXL-based link to the other device.

If the particular number of flits indicated by the parameter have not yet been sent, it is further determined at 1512 whether there is more data to send over the CXL-based link. If so, the process returns to 1506 where an additional protected flit is generated. If there is no more data to be sent over the link (e.g., where the link is ready to go idle), then one of two options may be utilized. In one option, at 1514, one or more placeholder flits (e.g., MAC_NOP or IDE idle flits, which may have LLCRD Flit encoding with subtype = Security) may be generated and transmitted over the CXL-based link until the particular number of flits have been sent, after which a MAC flit is generated and transmitted as described above with respect to 1510 (with the integrity value being based at least in part on the placeholder flits). In another option, at 1516, a truncated MAC flit (e.g., a LLCTRL flit containing the integrity value) may be generated and sent over the CXL-based link to indicate an early MAC termination.

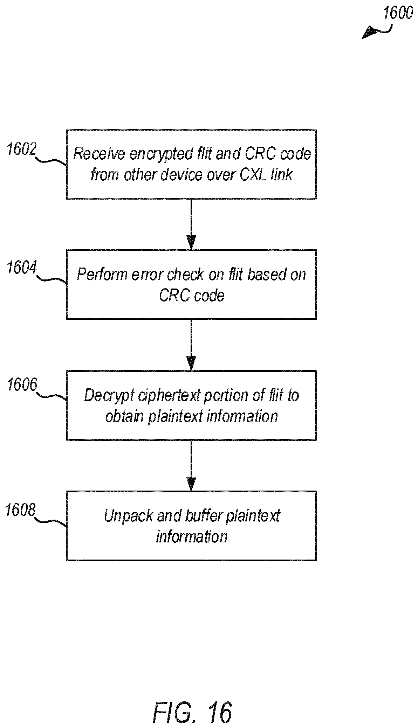

FIGS. 16-17 illustrate flow diagrams of example processes 1600, 1700 of handling protected flits in accordance with the present disclosure. Referring to FIG. 16, an example flit decryption process 1600 is shown. At 1602, an encrypted flit and corresponding CRC code are received from another device over a CXL-based link. The flit may be received by circuitry of a port that implements one or more layers of the CXL-based protocol (e.g., CXL.cache or CXL.mem). The flit may be at least partially encrypted (only a portion of the flit includes ciphertext, e.g. as described above for Header flits), or fully encrypted (all of the flit includes ciphertext, e.g., as described above for All Data flits). The CRC code may be based on (e.g., generated from) the ciphertext portion of the flit. The flit may include 528 bits. In some cases, the flit may include an unencrypted header field that is 32 bits of the 528 bits (e.g., a Header flit format), while in other cases, the flit may include 528 bits of ciphertext (e.g., All Data flits).

At 1604, an agent of the port performs an error check on the flit based on the CRC code received, and if the error check passes, at 1606, decrypts the ciphertext portion of the flit to yield plaintext flit information. The decryption may be based on an AES-based protocol, such as the AES Galois/Counter Mode (AES-GCM) protocol or AES Counter Mode (AES-CTR) protocol. At 1608, the plaintext information is processed, which may include being unpacked and passed to/stored in a buffer. For instance, as described above with respect to FIG. 13, a flit unpacker (e.g., 1306 of FIG. 13) may unpack and de-multiplex flits of different protocols and pass the flits to corresponding buffers (e.g., 1302, 1304 of FIG. 13). The plaintext information may be processed further as well or may be processed in another manner at 1608.

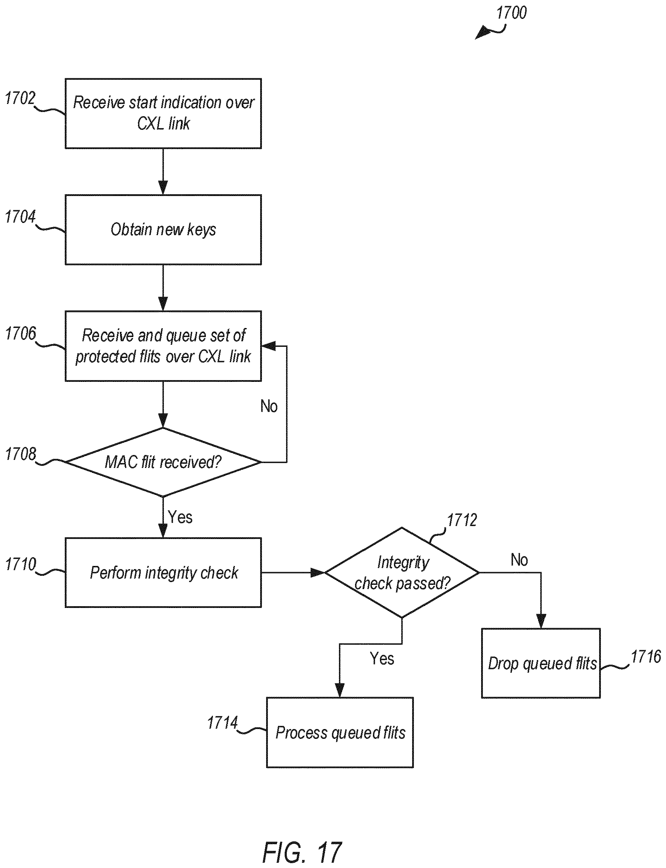

Referring to FIG. 17, an example integrity check process 1700 is shown. At 1702, a start indication is received by circuitry of a port that implements one or more layers of a CXL-based protocol. The start indication may be formatted as described above (e.g., with respect to operation 1502 of FIG. 15). At 1704, a set of new keys are obtained based on receipt of the start indication at 1702. The new keys may include a new decryption key for decrypting information in subsequently-received flits, a new key for MAC authentication, or another type of key used in the decryption and/or integrity check process.

At 1706, a set of flits are received at the port circuitry from the CXL-based link and are queued. At 1708, an agent of the port determines whether a MAC flit has been received in the set. If not, the agent waits as additional flits are received until a MAC flit is detected. If a MAC flit has been received, the agent at 1712 performs an integrity check on a set of flits in the queue based on an integrity value (e.g., MAC) of the MAC flit. In some cases, the MAC and integrity check may be based on the Advanced Encryption Standard Galois/Counter Mode (AES-GCM) protocol, the Advanced Encryption Standard Galois Message Authentication Code (AES-GMAC) protocol, or another AES-based protocol. The number of flits in the set of flits may be based on a parameter, such as the skid_mode_flit_count or containment_flit_count parameters described above. In the deterministic mode of operation as shown in FIG. 17, the queued flits may be further processed at 1714 if the integrity check passes, and may be dropped at 1716 if the integrity check fails. In some cases, this may include both decrypting and processing (e.g., 1606 and 1608 of FIG. 16). In other cases, the queued flits may be decrypted while queued, prior to passage of an integrity check, and the decrypted information may be released for processing upon passage of the integrity check. In implementations using the skid mode of operation as described above, the flits may be processed in parallel with or prior to the integrity check at 1712, and may be dropped or prevented from further processing upon failure of the integrity check.

The foregoing disclosure has presented a number of example techniques for securing flits on CXL links. It should be appreciated that such techniques may be applied to other interconnect protocols. For instance, while some of the techniques discussed herein were described with reference to PCIe- or CXL-based protocols, it should be appreciated that techniques may apply to other interconnect protocols, such as OpenCAPI^{™}, Gen-Z^{™}, UPI, Universal Serial Bus, (USB), Cache Coherent Interconnect for Accelerators (CCIX^{™}), Advanced Micro Device^{™}'s (AMD^{™}) Infinity^{™}, Common Communication Interface (CCI), or Qualcomm^{™}'s Centriq^{™} interconnect, among others, or to other types of packet-based protocols.

Note that the apparatus', methods', and systems described above may be implemented in any electronic device or system as aforementioned. As specific illustrations, the figures below provide exemplary systems for utilizing embodiments as described herein. As the systems below are described in more detail, a number of different interconnects are disclosed, described, and revisited from the discussion above. And as is readily apparent, the advances described above may be applied to any of those interconnects, fabrics, or architectures.

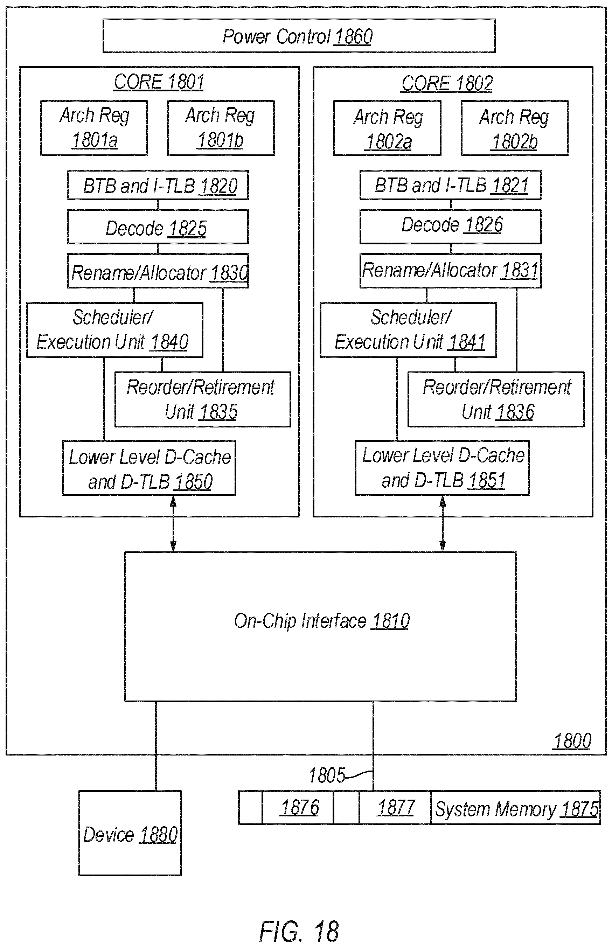

Referring to FIG. 18, an embodiment of a block diagram for a computing system including a multicore processor is depicted. Processor 1800 includes any processor or processing device, such as a microprocessor, an embedded processor, a digital signal processor (DSP), a network processor, a handheld processor, an application processor, a co-processor, a system on a chip (SOC), or other device to execute code. Processor 1800, in one embodiment, includes at least two cores-core 1801 and 1802, which may include asymmetric cores or symmetric cores (the illustrated embodiment). However, processor 1800 may include any number of processing elements that may be symmetric or asymmetric.

In one embodiment, a processing element refers to hardware or logic to support a software thread. Examples of hardware processing elements include: a thread unit, a thread slot, a thread, a process unit, a context, a context unit, a logical processor, a hardware thread, a core, and/or any other element, which is capable of holding a state for a processor, such as an execution state or architectural state. In other words, a processing element, in one embodiment, refers to any hardware capable of being independently associated with code, such as a software thread, operating system, application, or other code. A physical processor (or processor socket) typically refers to an integrated circuit, which potentially includes any number of other processing elements, such as cores or hardware threads.

A core often refers to logic located on an integrated circuit capable of maintaining an independent architectural state, wherein each independently maintained architectural state is associated with at least some dedicated execution resources. In contrast to cores, a hardware thread typically refers to any logic located on an integrated circuit capable of maintaining an independent architectural state, wherein the independently maintained architectural states share access to execution resources. As can be seen, when certain resources are shared and others are dedicated to an architectural state, the line between the nomenclature of a hardware thread and core overlaps. Yet often, a core and a hardware thread are viewed by an operating system as individual logical processors, where the operating system is able to individually schedule operations on each logical processor.

Physical processor 1800, as illustrated in FIG. 18, includes two cores-core 1801 and 1802. Here, core 1801 and 1802 are considered symmetric cores, i.e. cores with the same configurations, functional units, and/or logic. In another embodiment, core 1801 includes an out-of-order processor core, while core 1802 includes an in-order processor core. However, cores 1801 and 1802 may be individually selected from any type of core, such as a native core, a software managed core, a core adapted to execute a native Instruction Set Architecture (ISA), a core adapted to execute a translated Instruction Set Architecture (ISA), a co-designed core, or other known core. In a heterogeneous core environment (i.e. asymmetric cores), some form of translation, such a binary translation, may be utilized to schedule or execute code on one or both cores. Yet to further the discussion, the functional units illustrated in core 1801 are described in further detail below, as the units in core 1802 operate in a similar manner in the depicted embodiment.

As depicted, core 1801 includes two hardware threads 1801a and 1801b, which may also be referred to as hardware thread slots 1801a and 1801b. Therefore, software entities, such as an operating system, in one embodiment potentially view processor 1800 as four separate processors, i.e., four logical processors or processing elements capable of executing four software threads concurrently. As alluded to above, a first thread is associated with architecture state registers 1801a, a second thread is associated with architecture state registers 1801b, a third thread may be associated with architecture state registers 1802a, and a fourth thread may be associated with architecture state registers 1802b. Here, each of the architecture state registers (1801a, 1801b, 1802a, and 1802b) may be referred to as processing elements, thread slots, or thread units, as described above. As illustrated, architecture state registers 1801a are replicated in architecture state registers 1801b, so individual architecture states/contexts are capable of being stored for logical processor 1801a and logical processor 1801b. In core 1801, other smaller resources, such as instruction pointers and renaming logic in allocator and renamer block 1830 may also be replicated for threads 1801a and 1801b. Some resources, such as re-order buffers in reorder/retirement unit 1835, ILTB 1820, load/store buffers, and queues may be shared through partitioning. Other resources, such as general purpose internal registers, page-table base register(s), low-level data-cache and data-TLB 1815, execution unit(s) 1840, and portions of out-of-order unit 1835 are potentially fully shared.

Processor 1800 often includes other resources, which may be fully shared, shared through partitioning, or dedicated by/to processing elements. In FIG. 18, an embodiment of a purely exemplary processor with illustrative logical units/resources of a processor is illustrated. Note that a processor may include, or omit, any of these functional units, as well as include any other known functional units, logic, or firmware not depicted. As illustrated, core 1801 includes a simplified, representative out-of-order (OOO) processor core. But an in-order processor may be utilized in different embodiments. The OOO core includes a branch target buffer 1820 to predict branches to be executed/taken and an instruction-translation buffer (I-TLB) 1820 to store address translation entries for instructions.

Core 1801 further includes decode module 1825 coupled to fetch unit 1820 to decode fetched elements. Fetch logic, in one embodiment, includes individual sequencers associated with thread slots 1801a, 1801b, respectively. Usually core 1801 is associated with a first ISA, which defines/specifies instructions executable on processor 1800. Often machine code instructions that are part of the first ISA include a portion of the instruction (referred to as an opcode), which references/specifies an instruction or operation to be performed. Decode logic 1825 includes circuitry that recognizes these instructions from their opcodes and passes the decoded instructions on in the pipeline for processing as defined by the first ISA. For example, as discussed in more detail below decoders 1825, in one embodiment, include logic designed or adapted to recognize specific instructions, such as transactional instruction. As a result of the recognition by decoders 1825, the architecture or core 1801 takes specific, predefined actions to perform tasks associated with the appropriate instruction. It is important to note that any of the tasks, blocks, operations, and methods described herein may be performed in response to a single or multiple instructions; some of which may be new or old instructions. Note decoders 1826, in one embodiment, recognize the same ISA (or a subset thereof). Alternatively, in a heterogeneous core environment, decoders 1826 recognize a second ISA (either a subset of the first ISA or a distinct ISA).

In one example, allocator and renamer block 1830 includes an allocator to reserve resources, such as register files to store instruction processing results. However, threads 1801a and 1801b are potentially capable of out-of-order execution, where allocator and renamer block 1830 also reserves other resources, such as reorder buffers to track instruction results. Unit 1830 may also include a register renamer to rename program/instruction reference registers to other registers internal to processor 1800. Reorder/retirement unit 1835 includes components, such as the reorder buffers mentioned above, load buffers, and store buffers, to support out-of-order execution and later in-order retirement of instructions executed out-of-order.

Scheduler and execution unit(s) block 1840, in one embodiment, includes a scheduler unit to schedule instructions/operation on execution units. For example, a floating point instruction is scheduled on a port of an execution unit that has an available floating point execution unit. Register files associated with the execution units are also included to store information instruction processing results. Exemplary execution units include a floating point execution unit, an integer execution unit, a jump execution unit, a load execution unit, a store execution unit, and other known execution units.

Lower level data cache and data translation buffer (D-TLB) 1850 are coupled to execution unit(s) 1840. The data cache is to store recently used/operated on elements, such as data operands, which are potentially held in memory coherency states. The D-TLB is to store recent virtual/linear to physical address translations. As a specific example, a processor may include a page table structure to break physical memory into a plurality of virtual pages.

Here, cores 1801 and 1802 share access to higher-level or further-out cache, such as a second level cache associated with on-chip interface 1810. Note that higher-level or further-out refers to cache levels increasing or getting further way from the execution unit(s). In one embodiment, higher-level cache is a last-level data cache-last cache in the memory hierarchy on processor 1800-such as a second or third level data cache. However, higher level cache is not so limited, as it may be associated with or include an instruction cache. A trace cache-a type of instruction cache-instead may be coupled after decoder 1825 to store recently decoded traces. Here, an instruction potentially refers to a macro-instruction (i.e. a general instruction recognized by the decoders), which may decode into a number of micro-instructions (micro-operations).

In the depicted configuration, processor 1800 also includes on-chip interface module 1810. Historically, a memory controller, which is described in more detail below, has been included in a computing system external to processor 1800. In this scenario, on-chip interface 1810 is to communicate with devices external to processor 1800, such as system memory 1875, a chipset (often including a memory controller hub to connect to memory 1875 and an I/O controller hub to connect peripheral devices), a memory controller hub, a northbridge, or other integrated circuit. And in this scenario, bus 1805 may include any known interconnect, such as multi-drop bus, a point-to-point interconnect, a serial interconnect, a parallel bus, a coherent (e.g. cache coherent) bus, a layered protocol architecture, a differential bus, and a GTL bus.

Memory 1875 may be dedicated to processor 1800 or shared with other devices in a system. Common examples of types of memory 1875 include DRAM, SRAM, non-volatile memory (NV memory), and other known storage devices. Note that device 1880 may include a graphic accelerator, processor or card coupled to a memory controller hub, data storage coupled to an I/O controller hub, a wireless transceiver, a flash device, an audio controller, a network controller, or other known device.

Recently however, as more logic and devices are being integrated on a single die, such as SOC, each of these devices may be incorporated on processor 1800. For example in one embodiment, a memory controller hub is on the same package and/or die with processor 1800. Here, a portion of the core (an on-core portion) 1810 includes one or more controller(s) for interfacing with other devices such as memory 1875 or a graphics device 1880. The configuration including an interconnect and controllers for interfacing with such devices is often referred to as an on-core (or un-core configuration). As an example, on-chip interface 1810 includes a ring interconnect for on-chip communication and a high-speed serial point-to-point link 1805 for off-chip communication. Yet, in the SOC environment, even more devices, such as the network interface, co-processors, memory 1875, graphics processor 1880, and any other known computer devices/interface may be integrated on a single die or integrated circuit to provide small form factor with high functionality and low power consumption.

In one embodiment, processor 1800 is capable of executing a compiler, optimization, and/or translator code 1877 to compile, translate, and/or optimize application code 1876 to support the apparatus and methods described herein or to interface therewith. A compiler often includes a program or set of programs to translate source text/code into target text/code. Usually, compilation of program/application code with a compiler is done in multiple phases and passes to transform hi-level programming language code into low-level machine or assembly language code. Yet, single pass compilers may still be utilized for simple compilation. A compiler may utilize any known compilation techniques and perform any known compiler operations, such as lexical analysis, preprocessing, parsing, semantic analysis, code generation, code transformation, and code optimization.

Larger compilers often include multiple phases, but most often these phases are included within two general phases: (1) a front-end, i.e. generally where syntactic processing, semantic processing, and some transformation/optimization may take place, and (2) a back-end, i.e. generally where analysis, transformations, optimizations, and code generation takes place. Some compilers refer to a middle, which illustrates the blurring of delineation between a front-end and back end of a compiler. As a result, reference to insertion, association, generation, or other operation of a compiler may take place in any of the aforementioned phases or passes, as well as any other known phases or passes of a compiler. As an illustrative example, a compiler potentially inserts operations, calls, functions, etc. in one or more phases of compilation, such as insertion of calls/operations in a front-end phase of compilation and then transformation of the calls/operations into lower-level code during a transformation phase. Note that during dynamic compilation, compiler code or dynamic optimization code may insert such operations/calls, as well as optimize the code for execution during runtime. As a specific illustrative example, binary code (already compiled code) may be dynamically optimized during runtime. Here, the program code may include the dynamic optimization code, the binary code, or a combination thereof.

Similar to a compiler, a translator, such as a binary translator, translates code either statically or dynamically to optimize and/or translate code. Therefore, reference to execution of code, application code, program code, or other software environment may refer to: (1) execution of a compiler program(s), optimization code optimizer, or translator either dynamically or statically, to compile program code, to maintain software structures, to perform other operations, to optimize code, or to translate code; (2) execution of main program code including operations/calls, such as application code that has been optimized/compiled; (3) execution of other program code, such as libraries, associated with the main program code to maintain software structures, to perform other software related operations, or to optimize code; or (4) a combination thereof.

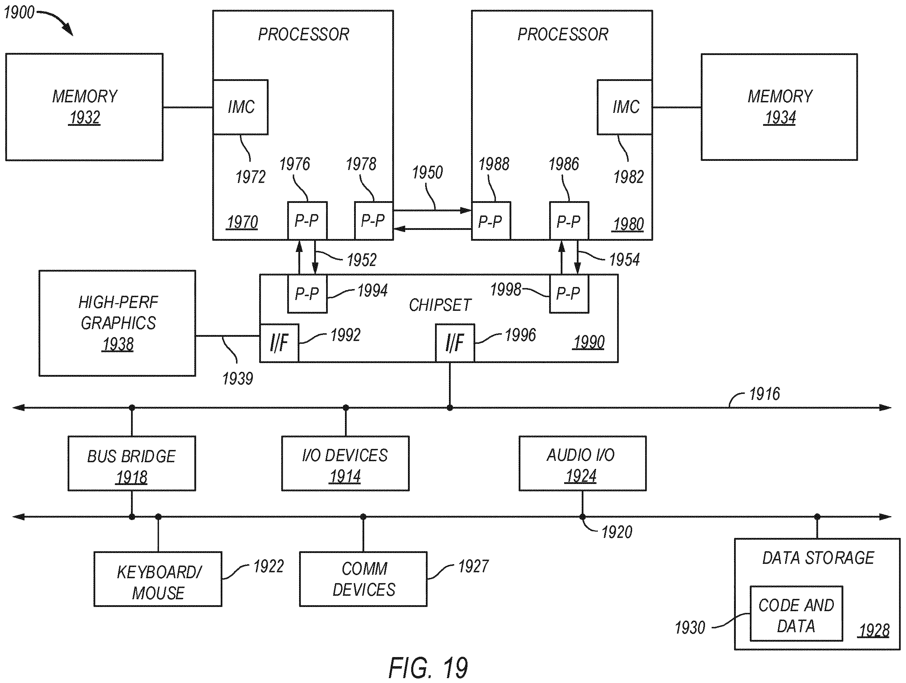

Referring now to FIG. 19, shown is a block diagram of another system 1900 in accordance with an embodiment of the present disclosure. As shown in FIG. 19, multiprocessor system 1900 is a point-to-point interconnect system, and includes a first processor 1970 and a second processor 1980 coupled via a point-to-point interconnect 1950. Each of processors 1970 and 1980 may be some version of a processor. In one embodiment, 1952 and 1954 are part of a serial, point-to-point coherent interconnect fabric, such as a high-performance architecture. As a result, aspects of the present disclosure may be implemented within the QPI architecture.

While shown with only two processors 1970, 1980, it is to be understood that the scope of the present disclosure is not so limited. In other embodiments, one or more additional processors may be present in a given processor.

Processors 1970 and 1980 are shown including integrated memory controller units 1972 and 1982, respectively. Processor 1970 also includes as part of its bus controller units point-to-point (P-P) interfaces 1976 and 1978; similarly, second processor 1980 includes P-P interfaces 1986 and 1988. Processors 1970, 1980 may exchange information via a point-to-point (P-P) interface 1950 using P-P interface circuits 1978, 1988. As shown in FIG. 19, IMCs 1972 and 1982 couple the processors to respective memories, namely a memory 1932 and a memory 1934, which may be portions of main memory locally attached to the respective processors.

Processors 1970, 1980 each exchange information with a chipset 1990 via individual P-P interfaces 1952, 1954 using point to point interface circuits 1976, 1994, 1986, 1998. Chipset 1990 also exchanges information with a high-performance graphics circuit 1938 via an interface circuit 1992 along a high-performance graphics interconnect 1939.

A shared cache (not shown) may be included in either processor or outside of both processors; yet connected with the processors via P-P interconnect, such that either or both processors' local cache information may be stored in the shared cache if a processor is placed into a low power mode.

Chipset 1990 may be coupled to a first bus 1916 via an interface 1996. In one embodiment, first bus 1916 may be a Peripheral Component Interconnect (PCI) bus, or a bus such as a PCI Express bus or another third generation I/O interconnect bus, although the scope of the present disclosure is not so limited.

As shown in FIG. 19, various I/O devices 1914 are coupled to first bus 1916, along with a bus bridge 1918 which couples first bus 1916 to a second bus 1920. In one embodiment, second bus 1920 includes a low pin count (LPC) bus. Various devices are coupled to second bus 1920 including, for example, a keyboard and/or mouse 1922, communication devices 1927 and a storage unit 1928 such as a disk drive or other mass storage device which often includes instructions/code and data 1930, in one embodiment. Further, an audio I/O 1924 is shown coupled to second bus 1920. Note that other architectures are possible, where the included components and interconnect architectures vary. For example, instead of the point-to-point architecture of FIG. 19, a system may implement a multi-drop bus or other such architecture.

While aspects of the present disclosure have been described with respect to a limited number of embodiments, those skilled in the art will appreciate numerous modifications and variations therefrom. It is intended that the appended claims cover all such modifications and variations as fall within the scope of this present disclosure

A design may go through various stages, from creation to simulation to fabrication. Data representing a design may represent the design in a number of manners. First, as is useful in simulations, the hardware may be represented using a hardware description language or another functional description language. Additionally, a circuit level model with logic and/or transistor gates may be produced at some stages of the design process. Furthermore, most designs, at some stage, reach a level of data representing the physical placement of various devices in the hardware model. In the case where conventional semiconductor fabrication techniques are used, the data representing the hardware model may be the data specifying the presence or absence of various features on different mask layers for masks used to produce the integrated circuit. In any representation of the design, the data may be stored in any form of a machine readable medium. A memory or a magnetic or optical storage such as a disc may be the machine readable medium to store information transmitted via optical or electrical wave modulated or otherwise generated to transmit such information. When an electrical carrier wave indicating or carrying the code or design is transmitted, to the extent that copying, buffering, or re-transmission of the electrical signal is performed, a new copy is made. Thus, a communication provider or a network provider may store on a tangible, machine-readable medium, at least temporarily, an article, such as information encoded into a carrier wave, embodying techniques of embodiments of the present disclosure.

A module as used herein refers to any combination of hardware, software, and/or firmware. As an example, a module includes hardware, such as a micro-controller, associated with a non-transitory medium to store code adapted to be executed by the micro-controller. Therefore, reference to a module, in one embodiment, refers to the hardware, which is specifically configured to recognize and/or execute the code to be held on a non-transitory medium. Furthermore, in another embodiment, use of a module refers to the non-transitory medium including the code, which is specifically adapted to be executed by the microcontroller to perform predetermined operations. And as can be inferred, in yet another embodiment, the term module (in this example) may refer to the combination of the microcontroller and the non-transitory medium. Often module boundaries that are illustrated as separate commonly vary and potentially overlap. For example, a first and a second module may share hardware, software, firmware, or a combination thereof, while potentially retaining some independent hardware, software, or firmware. In one embodiment, use of the term logic includes hardware, such as transistors, registers, or other hardware, such as programmable logic devices.

Use of the phrase 'configured to,' in one embodiment, refers to arranging, putting together, manufacturing, offering to sell, importing and/or designing an apparatus, hardware, logic, or element to perform a designated or determined task. In this example, an apparatus or element thereof that is not operating is still `configured to' perform a designated task if it is designed, coupled, and/or interconnected to perform said designated task. As a purely illustrative example, a logic gate may provide a 0 or a 1 during operation. But a logic gate `configured to' provide an enable signal to a clock does not include every potential logic gate that may provide a 1 or 0. Instead, the logic gate is one coupled in some manner that during operation the 1 or 0 output is to enable the clock. Note once again that use of the term `configured to' does not require operation, but instead focus on the latent state of an apparatus, hardware, and/or element, where in the latent state the apparatus, hardware, and/or element is designed to perform a particular task when the apparatus, hardware, and/or element is operating.

Furthermore, use of the phrases 'to,' `capable of/to,' and or 'operable to,' in one embodiment, refers to some apparatus, logic, hardware, and/or element designed in such a way to enable use of the apparatus, logic, hardware, and/or element in a specified manner. Note as above that use of to, capable to, or operable to, in one embodiment, refers to the latent state of an apparatus, logic, hardware, and/or element, where the apparatus, logic, hardware, and/or element is not operating but is designed in such a manner to enable use of an apparatus in a specified manner.

A value, as used herein, includes any known representation of a number, a state, a logical state, or a binary logical state. Often, the use of logic levels, logic values, or logical values is also referred to as 1's and 0's, which simply represents binary logic states. For example, a 1 refers to a high logic level and 0 refers to a low logic level. In one embodiment, a storage cell, such as a transistor or flash cell, may be capable of holding a single logical value or multiple logical values. However, other representations of values in computer systems have been used. For example the decimal number ten may also be represented as a binary value of 1010 and a hexadecimal letter A. Therefore, a value includes any representation of information capable of being held in a computer system.

Moreover, states may be represented by values or portions of values. As an example, a first value, such as a logical one, may represent a default or initial state, while a second value, such as a logical zero, may represent a non-default state. In addition, the terms reset and set, in one embodiment, refer to a default and an updated value or state, respectively. For example, a default value potentially includes a high logical value, i.e. reset, while an updated value potentially includes a low logical value, i.e. set. Note that any combination of values may be utilized to represent any number of states.

The embodiments of methods, hardware, software, firmware or code set forth above may be implemented via instructions or code stored on a machine-accessible, machine readable, computer accessible, or computer readable medium which are executable by a processing element. A non-transitory machine-accessible/readable medium includes any mechanism that provides (i.e., stores and/or transmits) information in a form readable by a machine, such as a computer or electronic system. For example, a non-transitory machine-accessible medium includes random-access memory (RAM), such as static RAM (SRAM) or dynamic RAM (DRAM); ROM; magnetic or optical storage medium; flash memory devices; electrical storage devices; optical storage devices; acoustical storage devices; other form of storage devices for holding information received from transitory (propagated) signals (e.g., carrier waves, infrared signals, digital signals); etc., which are to be distinguished from the non-transitory mediums that may receive information there from.

Instructions used to program logic to perform embodiments of the present disclosure may be stored within a memory in the system, such as DRAM, cache, flash memory, or other storage. Furthermore, the instructions can be distributed via a network or by way of other computer readable media. Thus a machine-readable medium may include any mechanism for storing or transmitting information in a form readable by a machine (e.g., a computer), but is not limited to, floppy diskettes, optical disks, Compact Disc, Read-Only Memory (CD-ROMs), and magneto-optical disks, Read-Only Memory (ROMs), Random Access Memory (RAM), Erasable Programmable Read-Only Memory (EPROM), Electrically Erasable Programmable Read-Only Memory (EEPROM), magnetic or optical cards, flash memory, or a tangible, machine-readable storage used in the transmission of information over the Internet via electrical, optical, acoustical or other forms of propagated signals (e.g., carrier waves, infrared signals, digital signals, etc.). Accordingly, the computer-readable medium includes any type of tangible machine-readable medium suitable for storing or transmitting electronic instructions or information in a form readable by a machine (e.g., a computer).

The following examples pertain to embodiments in accordance with this Specification. Although each example described below is described with respect to Compute Express Link (CXL)-based protocols, any of the following examples may be utilized for a PCIe-based protocol, a Universal Serial Bus (USB)-based protocol, a Cache Coherent Interconnect for Accelerators (CCIX) protocol, or a Transmission Control Protocol/Internet Protocol (TCP/IP).

In an embodiment an apparatus includes a port comprising circuitry to implement one or more layers of a Compute Express Link (CXL)-based protocol, where the port comprises an agent to: obtain information to be transmitted to another device over a link based on the CXL-based protocol via a flit; encrypt at least a portion of the information to yield a ciphertext; generate a cyclic redundancy check (CRC) code based on the ciphertext; and cause a flit to be generated, the flit comprising the ciphertext; wherein the port is to use the circuitry to transmit the flit and the CRC code to the other device over the link.

In an embodiment, the agent is further to generate a message authentication code (MAC) based on a set of previously-transmitted flits, and the flit comprises the MAC.

In an embodiment the MAC is generated based on one of an Advanced Encryption Standard Galois/Counter Mode (AES-GCM) protocol and an Advanced Encryption Standard Galois Message Authentication Code (AES-GMAC) protocol.

In an embodiment the set of flits comprises a number of flits indicated by a parameter.

In an embodiment the set of flits comprises at least one placeholder flit.

In an embodiment a parameter indicates a number of flits the MAC is to be based on, the set of flits comprises fewer flits than indicated by the parameter, and the flit indicates that the MAC is based on fewer flits than indicated by the parameter.

In an embodiment the encryption is based on an Advanced Encryption Standard (AES)-based protocol.

In an embodiment the AES-based protocol is one of AES Galois/Counter Mode (AES-GCM) protocol and AES Counter Mode (AES-CTR) protocol.

In an embodiment prior to generating the flit comprising the ciphertext, the agent is further to: cause an unencrypted control flit to be generated comprising an indication that subsequent flits sent to the other device over the link will be at least partially encrypted; and the port is to use the circuitry to transmit the unencrypted control flit to the other device before transmitting the flit comprising the ciphertext.

In an embodiment the agent is further to obtain a new key for encrypting information in subsequent flits.

In an embodiment the flit is a header flit to comprise a header field and a set of additional fields, and the agent is to encrypt the information associated with the additional fields to yield the ciphertext.

In an embodiment the flit comprises 528 bits, and the header field comprises 32 bits of the 528 bits.

In an embodiment the CXL-based protocol is one of a CXL.cache or CXL.mem protocol.

In an embodiment a method comprises obtaining information to be transmitted to another device over a link based on a Compute Express Link (CXL)-based protocol via a flit; encrypting at least a portion of the information to yield a ciphertext; generating a cyclic redundancy check (CRC) code based on the ciphertext; generating a flit comprising the ciphertext; and transmitting the flit and the CRC to the other device over the link.

In an embodiment a message authentication code (MAC) is generated based on a set of previously-transmitted flits, and a flit comprises the MAC.

In an embodiment a new key is obtained for encrypting information in subsequent flits.

In an embodiment the flit is a header flit to comprise a header field and a set of additional fields, and the method further comprises encrypting the information associated with the additional fields to yield the ciphertext.

In an embodiment an apparatus comprises a port comprising circuitry to implement one or more layers of a Compute Express Link (CXL)-based protocol, wherein: the circuitry is to receive a flit and a corresponding cyclic redundancy check (CRC) code from another device over a link, wherein the link is based on the CXL-based protocol and the flit comprises ciphertext; and the port comprises an agent to: perform an error check on the flit based on the CRC code; decrypt the ciphertext portion of the flit to yield plaintext flit information based on a determination that the error check passed; and process the plaintext flit information.

In an embodiment the flit is a first flit and the agent is further to: receive a second flit comprising a message authentication code (MAC), the MAC based on a set of flits comprising the first flit; and perform, based on the MAC, an integrity check on the set of flits.

In an embodiment the agent is to process the plaintext information based on a determination that the integrity check passed.

In an embodiment the agent is to process the plaintext flit information by unpacking and buffering the plaintext flit information.

In an embodiment the flit is a header flit comprising an unencrypted header field and the ciphertext.

In an embodiment prior to receiving the flit comprising the ciphertext, the circuitry is to receive an unencrypted control flit comprising an indication that subsequent flits received over the link will be at least partially encrypted; and the agent is to obtain a new decryption key for decrypting ciphertext in subsequent flits based on the unencrypted control flit.

In an embodiment the decryption is based on an Advanced Encryption Standard (AES)-based protocol.

In an embodiment a flit and a corresponding cyclic redundancy check (CRC) code are obtained from another device over a link based on Compute Express Link (CXL)-based protocol, the flit comprising ciphertext; the method further comprising performing an error check on the flit based on the CRC code; decrypting the ciphertext of the flit to yield plaintext flit information based on a determination that the error check passed; and processing the plaintext flit information.

In an embodiment the flit is a first flit and the method further comprises: receiving a second flit comprising a message authentication code (MAC), the MAC based on a set of flits comprising the first flit; and performing, based on the MAC, an integrity check on the set of flits.

In an embodiment processing the plaintext information is based on a determination that the integrity check passed.

In an embodiment processing the plaintext flit information comprises unpacking and buffering the plaintext flit information.

In an embodiment prior to receiving the flit comprising the ciphertext, an unencrypted control flit is received comprising an indication that subsequent flits received over the link will be at least partially encrypted; and obtaining a new decryption key for decrypting ciphertext in subsequent flits based on the unencrypted control flit.

In an embodiment a system comprises: a first device; and a second device coupled to the first device over a link based on a Compute Express Link (CXL)-based protocol; wherein the first device comprises a port comprising circuitry to implement one or more layers of the CXL-based protocol, the port comprising an agent to: obtain information to be transmitted to another device over a link based on the CXL-based protocol via a flit; encrypt at least a portion of the information to yield a ciphertext; generate a cyclic redundancy check (CRC) code based on the ciphertext; and cause a flit to be generated, the flit comprising the ciphertext; wherein the port is to use the circuitry to transmit the flit and the CRC to the other device.

In an embodiment the second device comprises: a port comprising circuitry to implement one or more layers of the CXL-based protocol, wherein the circuitry is to receive the flit from the first device over the link and the port comprises an agent to: perform an error check on the flit based on the CRC code; decrypt the ciphertext of the flit to yield plaintext flit information based on a determination that the error check passed; and process the plaintext flit information.

In an embodiment a system comprises: one or more processors and one or more computer-readable media comprising instructions that, when executed by the one or more processors, cause the one or more processors to perform the inventive method.

In an embodiment machine-readable storage media includes machine-readable instructions, when executed, to implement the inventive method or realize the inventive apparatus.

Reference throughout this description to "one embodiment" or "an embodiment" means that a particular feature, structure, or characteristic described in connection with the embodiment is included in at least one embodiment of the present disclosure. Thus, the appearances of the phrases "in one embodiment" or "in an embodiment" in various places throughout this description are not necessarily all referring to the same embodiment. Furthermore, the particular features, structures, or characteristics may be combined in any suitable manner in one or more embodiments.

The foregoing use of embodiment and other exemplarily language does not necessarily refer to the same embodiment or the same example, but may refer to different and distinct embodiments, as well as potentially the same embodiment.

## Claims

1. A computer-implemented method comprising:
obtaining (1402) information to be transmitted to another device over a link based on a Compute Express Link, CXL, -based protocol via a flit;
encrypting (1404) at least a portion of the information to yield a ciphertext;
generating (1406) a cyclic redundancy check, CRC, code based on the ciphertext;
generating (1408) a flit comprising the ciphertext; and
transmitting (1410) the flit and the CRC to the other device over the link, further comprising generating a message authentication code, MAC, based on a set of previously-transmitted flits (1102), preparing a MAC flit (1106) comprising the MAC, and transmitting (1510) over the link the MAC flit (1106) after a delay due to a latency caused by the preparing of the MAC flit during which time subsequent flits (1104) of a further set of flits continue to be sent.

2. The method of claim 1, wherein the MAC is generated based on one of an Advanced Encryption Standard Galois/Counter Mode, AES-GCM, protocol and an Advanced Encryption Standard Galois Message Authentication Code, AES-GMAC, protocol.

3. The method of claim 1, wherein the set of flits (1102) comprises a number of flits indicated by a parameter.

4. The method of claim 3, wherein the set of flits (1102) comprises at least one placeholder flit.

5. The method of claim 1, wherein a parameter indicates a number of flits the MAC is to be based on, the set of flits comprises fewer flits than indicated by the parameter, and the flit indicates that the MAC is based on fewer flits than indicated by the parameter.

6. The method of any one of claims 1-5, wherein the encryption is based on an Advanced Encryption Standard, AES, -based protocol.

7. The method of claim 6, wherein the AES-based protocol is one of AES Galois/Counter Mode, AES-GCM, protocol and AES Counter Mode, AES-CTR, protocol.

8. The method of any one of claims 1-5, further comprising:
prior to generating the flit comprising the ciphertext, generating an unencrypted control flit comprising an indication that subsequent flits sent to the other device over the link will be at least partially encrypted; and
transmitting the unencrypted control flit to the other device before transmitting the flit comprising the ciphertext.

9. The method of claim 8, further comprising obtaining a new key for encrypting information in subsequent flits.

10. The method of any one of claims 1-5, wherein the flit is a header flit (900) to comprise a header field (902) and a set of additional fields, and the method further comprises encrypting the information associated with the additional fields to yield the ciphertext.

11. The method of claim 10, wherein the flit (900) comprises 528 bits, and the header field (902) comprises 32 bits of the 528 bits.

12. The method of any one of claims 1-5, wherein the CXL-based protocol is one of a CXL.cache or CXL.mem protocol.

13. An apparatus comprising means to perform a method as claimed in any preceding claim.

14. Machine-readable storage media including machine-readable instructions, when executed, to implement a method or realize an apparatus as claimed in any preceding claim.

## Patentansprüche

1. Computerimplementiertes Verfahren, umfassend:
Erhalten (1402) von Informationen, die über einen Link basierend auf einem Compute-Express-Link-basierten, CXLbasierten, Protokoll über eine Flit zu einer anderen Vorrichtung übertragen werden;
Verschlüsseln (1404) mindestens eines Teils der Informationen, um einen chiffrierten Text zu liefern;
Erzeugen (1406) eines zyklischen Redundanzprüfungscodes Cyclic Redundancy Check code, CRC-Code) basierend auf dem chiffrierten Text;
Erzeugen (1408) einer Flit, die den chiffrierten Text umfasst; und
Übertragen (1410) der Flit und der CRC über den Link zu der anderen Vorrichtung, das ferner ein Erzeugen eines Nachrichtenauthentifizierungscodes (Message Authentication Code, MAC) basierend auf einem Satz früher übertragener Flits (1102), ein Vorbereiten einer MAC-Flit (1106), die den MAC umfasst, und ein Übertragen (1510) der MAC-Flit (1106) über den Link nach einer Verzögerung aufgrund einer Latenz umfasst, die durch das Vorbereiten der MAC-Flit verursacht wird, währenddessen zeitlich nachfolgende Flits (1104) eines weiteren Satzes von Flits weiterhin gesendet werden.

2. Verfahren nach Anspruch 1, wobei der MAC basierend auf einem Galois-/Zählermodusprotokoll eines fortgeschrittenen Verschlüsselungsstandards (Advanced Encryption Standard Galois/Counter Mode protocol, AES-GCM-Protokoll) und einem Galois-Nachrichtenauthentifizierungscodeprotokoll eines fortgeschrittenen Verschlüsselungsstandards (Advanced Encryption Standard Galois Message Authentication Code protocol, AES-GMAC-Protokoll) erzeugt wird.

3. Verfahren nach Anspruch 1, wobei der Satz von Flits (1102) eine Anzahl von Flits umfasst, die durch einen Parameter angezeigt wird.

4. Verfahren nach Anspruch 3, wobei der Satz von Flits (1102) mindestens eine Platzhalter-Flit umfasst.

5. Verfahren nach Anspruch 1, wobei ein Parameter eine Anzahl von Flits anzeigt, auf denen der MAC basiert sein muss, wobei der Satz von Flits weniger Flits umfasst, als durch den Parameter angezeigt wird, und wobei die Flit angezeigt, dass der MAC auf weniger Flits basiert ist, als durch den Parameter angezeigt wird.

6. Verfahren nach einem der Ansprüche 1 bis 5, wobei die Verschlüsselung auf einem Protokoll basiert ist, das auf einem fortgeschrittenen Verschlüsselungsstandard (Advanced Encryption Standard based protocol, AESbasierten Protokoll) basiert ist.

7. Verfahren nach Anspruch 6, wobei das AES-basierte Protokoll eines von einem AES-Galois-/Zählermodusprotokoll, AES-GCM-Protokoll und einem AES-Zählermodusprotokoll, AES-CTR-Protokoll, ist.

8. Verfahren nach einem der Ansprüche 1 bis 5, das ferner umfasst:
vor dem Erzeugen der Flit, die den chiffrierten Text umfasst, Erzeugen einer unverschlüsselten Steuer-Flit, die eine Anzeige umfasst, dass nachfolgende Flits, die über den Link zu der anderen Vorrichtung gesendet werden, mindestens teilweise verschlüsselt sein werden; und Übertragen der unverschlüsselten Steuer-Flit zu der anderen Vorrichtung, bevor die Flit übertragen wird, die den chiffrierten Text umfasst.

9. Verfahren nach Anspruch 8, die ferner ein Erhalten eines neuen Schlüssels zum Verschlüsseln von Informationen in nachfolgenden Flits umfasst.

10. Verfahren nach einem der Ansprüche 1 bis 5, wobei die Flit eine Kopfzeilen-Flit (900) ist, die ein Kopfzeilenfeld (902) und einen Satz von zusätzlichen Feldern umfasst, und wobei das Verfahren ferner ein Verschlüsseln der Informationen umfasst, die mit den zusätzlichen Feldern assoziiert sind, um den chiffrierten Text zu liefern.

11. Verfahren nach Anspruch 10, wobei die Flit (900) 528 Bits umfasst und wobei das Kopfzeilenfeld (902) 32 Bits der 528 Bits umfasst.

12. Verfahren nach einem der Ansprüche 1 bis 5, wobei das CXL-basierte Protokoll eines von einem CXL.cache- oder einem CXL.mem-Protokoll ist.

13. Einrichtung, die ein Element zum Durchführen eines Verfahrens nach einem der vorhergehenden Ansprüche umfasst.

14. Maschinenlesbares Speichermedium, das maschinenlesbare Anweisungen beinhaltet, die, wenn sie ausgeführt werden, ein Verfahren implementieren oder eine Vorrichtung verwirklichen, wie es oder sie in einem der vorhergehenden Ansprüche beansprucht wird.

## Revendications

1. Procédé mis en oeuvre par ordinateur comprenant les étapes suivantes :
obtenir (1402) des informations à transmettre à un autre dispositif sur une liaison basée sur un protocole Compute Express Link, CXL, par l'intermédiaire d'un flit ;
chiffrer (1404) au moins une partie des informations pour obtenir un texte chiffré ;
générer (1406) un code de contrôle de redondance cyclique, CRC, basé sur le texte chiffré ;
générer (1408) un flit comprenant le texte chiffré ; et
transmettre (1410) le flit et le CRC à l'autre dispositif sur la liaison, le procédé comprenant en outre de générer un code d'authentification de message, MAC, sur la base d'un ensemble de flits précédemment transmis (1102), de préparer un flit MAC (1106) comprenant le MAC, et de transmettre (1510) sur la liaison le flit MAC (1106) après un délai dû à une latence causée par la préparation du flit MAC, pendant lequel les flits suivants (1104) d'un autre ensemble de flits continuent d'être envoyés.

2. Procédé selon la revendication 1, dans lequel le MAC est généré sur la base de l'un des protocoles suivants :
le protocole Advanced Encryption Standard Galois/Counter Mode, AES-GCM, et le protocole Advanced Encryption Standard Galois Message Authentication Code, AES-GMAC.

3. Procédé selon la revendication 1, dans lequel l'ensemble de flits (1102) comprend un nombre de flits indiqué par un paramètre.

4. Procédé selon la revendication 3, dans lequel l'ensemble de flits (1102) comprend au moins un flit de substitution.

5. Procédé selon la revendication 1, dans lequel un paramètre indique un nombre de flits sur lequel le MAC doit être basé, l'ensemble de flits comprend moins de flits qu'indiqué par le paramètre, et le flit indique que le MAC est basé sur moins de flits qu'indiqué par le paramètre.

6. Procédé selon l'une quelconque des revendications 1 à 5, dans lequel le cryptage est basé sur un protocole basé sur AES, Advanced Encryption Standard.

7. Procédé selon la revendication 6, dans lequel le protocole basé sur AES est l'un des protocoles suivants : le protocole AES Galois/Counter Mode, AES-GCM, et le protocole AES Counter Mode, AES-CTR.

8. Procédé selon l'une quelconque des revendications 1 à 5, comprenant en outre les étapes suivantes :
avant de générer le flit comprenant le texte chiffré, générer un flit de contrôle non chiffré comprenant une indication que les flits subséquents envoyés à l'autre dispositif sur la liaison seront au moins partiellement chiffrés ; et
transmettre le flit de contrôle non chiffré à l'autre dispositif avant de transmettre le flit comprenant le texte chiffré.

9. Procédé selon la revendication 8, comprenant en outre d'obtenir une nouvelle clé pour le chiffrement des informations dans les flits suivants.

10. Procédé selon l'une quelconque des revendications 1 à 5, dans lequel le flit est un flit d'en-tête (900) pour comprendre un champ d'en-tête (902) et un ensemble de champs supplémentaires, et le procédé comprend en outre de chiffrer les informations associées aux champs supplémentaires pour obtenir le texte chiffré.

11. Procédé selon la revendication 10, dans lequel le flit (900) comprend 528 bits, et le champ d'en-tête (902) comprend 32 bits des 528 bits.

12. Procédé selon l'une quelconque des revendications 1 à 5, dans lequel le protocole basé sur CXL est l'un des protocoles CXL.cache et CXL.mem.

13. Appareil comprenant des moyens pour exécuter un procédé selon l'une quelconque des revendications précédentes.

14. Support de stockage lisible par une machine incluant des instructions lisibles par une machine qui, lorsqu'elles sont exécutées, mettent en oeuvre un procédé ou réalisent un appareil selon l'une quelconque des revendications précédentes.
